Europäisches Patentamt

European Patent Office

Office européen des brevets

(19)

(11) **EP 0 507 355 B1**

(12)

# EUROPEAN PATENT SPECIFICATION

(45) Date of publication and mention
of the grant of the patent:
**08.01.1997 Bulletin 1997/02**

(51) Int Cl.⁶: **G10H 1/00**

(21) Application number: **92110153.1**

(22) Date of filing: **13.10.1987**

(54) **Musical tone control apparatus using detector**

Vorrichtung zur Musiktonsteuerung unter Verwendung eines Detektors

Dispositif pour commande de son musical au moyen de capteurs

(84) Designated Contracting States:
**DE FR GB IT NL SE**

(30) Priority: 25.11.1986 JP 280426/86
31.10.1986 JP 259805/86
02.12.1986 JP 287392/86
22.11.1986 JP 279030/86
18.11.1986 JP 274345/86
14.10.1986 JP 243348/86
22.11.1986 JP 279028/86
07.11.1986 JP 265167/86
20.02.1987 JP 37295/87

(43) Date of publication of application:
**07.10.1992 Bulletin 1992/41**

(62) Application number of earlier application in
accordance with Art. 76 EPC: **87114944.9**

(73) Proprietor: **YAMAHA CORPORATION
Hamamatsu-shi Shizuoka-ken (JP)**

(72) Inventors:
• **Hiyoshi, Teruo
Hamamatsu-shi Shizuoka-ken (JP)**
• **Suzuki, Hideo
Hamamatsu-shi Shizuoka-ken (JP)**
• **Nakada, Akira
hamamatsu-shi Shizuoka-ken (JP)**
• **Aoki, Eiichiro
Hamamatsu-shi Shizuoka-ken (JP)**
• **Sakama, Masao
Hamamatsu-shi Shizuoka-ken (JP)**

(74) Representative: **Kehl, Günther, Dipl.-Phys. et al
Patentanwälte
Hagemann & Kehl
Postfach 86 03 29
81630 München (DE)**

(56) References cited:
**US-A- 3 704 339          US-A- 3 935 669
US-A- 4 635 516**

## Description

The present invention generally relates to a musical tone control apparatus using a detector, and more particularly to a musical tone control apparatus which controls a musical tone in response to a movement of a player and the like detected by a detector.

Conventionally, musical tones are generated by playing a natural musical instrument (such as a violin, a piano, an organ and a bass drum) and an electronic musical instrument and the like. In such musical instruments, a tone pitch and a tone color of the generating musical tone is controlled by touching or depressing keys, strings or pedals by use of hands or feet of the player.

One type of a conventional automatic performing apparatus known in the art is disclosed in UK-A-2 071 389 where an amount of change in a motion of a moving element provided in a baton is detected. The change amount detected (e. g. by a magnet and Hall element) is converted into an electrical signal. A tempo clock signal generator provided in the apparatus is driven by the electrical signal to produce a tempo clock signal for reading out musical data preset in a memory. A volume level of a musical tone is set by a control section on the basis of the data of a peak level of the change amount in the motion of the baton. The tone data stored in the memory is read out on the basis of the tempo clock and is automatically sounded as a musical sound, at the set volume level. Thus, this patent application according to the prior art reveals an automatic performing apparatus capable of performing a musical piece with emotion of a player by reading out musical data preset in a memory in synchronism with a motion of a baton.

It is a primary object of the invention to provide a musical tone control apparatus which controls the musical tones based on the movement of the player such as the swing angle or the swing speed of the player's hand.

It is another object of the invention to provide an apparatus which generates artificial musical tones corresponding to natural tones generated by the player.

It is a further object of the invention to provide a detector which detects the movement of the player and an impulse given to the player's hand and the like.

These objects are achieved by a musical tone control apparatus comprising:

(a) musical tone control means for generating musical tone control data based on a detected result;
(b) musical tone generating means coupled to the control means for generating a musical tone signal based on the musical tone control data, characterized in that the musical tone control apparatus further comprises:
(c) detecting means mountable on or holdable by a predetermined portion of a player and coupled to the control means for detecting an angle of the predetermined portion of the player and for outputting the detected angle as the detected result to the musical tone control means.

Further advantages of the present invention can be taken from the claims 2 through 26 describing preferred embodiments of a musical tone control apparatus according to the invention.

Further objects and advantages of the present invention will be apparent from the following description, reference being had to the accompanying drawings wherein preferred embodiments of the present invention are clearly shown.

In the drawings:

Fig. 1 is a circuit diagram showing an embodiment of a musical tone generating apparatus according to the present invention employing an impulse detector;

Figs. 2(a) to 2(i) show waveforms at several points in the impulse detector shown in Fig. 1;

Fig. 3 is a circuit diagram showing an embodiment of a motion detector according to the present invention;

Figs. 4(a) to 4(f) show waveforms at several points within the motion detector shown in Fig. 3;

Fig. 5 is a block diagram showing an embodiment of a musical tone generating apparatus employing the motion detector shown in Fig. 3;

Fig. 6 is a block diagram showing an embodiment of a musical tone generating apparatus employing an angular velocity detector according to the present invention;

Fig. 7 shows an appearance of a player who is mounted by the angular velocity detector shown in Fig. 6;

Fig. 8 shows another appearance of a player who is mounted by a modified embodiment of the angular velocity detector according to the present invention;

Fig. 9 shows an appearance of the player who is mounted with a second embodiment of a musical tone generating apparatus according to the present invention;

Fig. 10 is a block diagram showing an electric constitution of the second embodiment shown in Fig. 9;

Fig. 11 is a perspective view showing an appearance of a detecting portion 502 for a right elbow of the player;

Fig. 12 is a perspective view showing a mechanical constitution of of the detecting portion 502;

Fig. 13 is a perspective view showing a detecting portion 504 for a right hand of the player;

Fig. 14 is a perspective view showing an internal constitution of the detecting portion 504;

Figs. 15A and 15B are sectional views respectively showing the internal constitution of the detecting portion 504;

Fig. 16 a perspective view showing a partial view of a first modified embodiment of the second embodiment shown in Fig. 9;

Fig. 17 shows an appearance of the player who is mounted with the first modified embodiment;

Fig. 18 shows an appearance of the player who is mounted with a second modified embodiment of the second embodiment shown in Fig. 9;

Figs. 19A to 19C show drawings for explaining an example of an arrangement of piezoelectric elements provided within the ultrasonic transmitter and the ultrasonic receiver;

Fig. 20 is a block diagram showing an electric constitution of the second modified embodiment of the second embodiment;

Fig. 21 is a block diagram showing a third embodiment of the present invention;

Fig. 22 shows an appearance of a stick 601 used in the third embodiment;

Fig. 23 shows a mechanical constitution of a angle detector 602 provided in the stick 601;

Fig. 24 shows a construction of detecting switches a to d which are mounted on the angle detector 602;

Fig. 25 shows a relation between relative positions and on/off states of the detecting switches a to d;

Fig. 26 shows a relation among the on/off states of the detecting switches a to d, tone pitches and key code data KC;

Figs. 27 and 28 are flowcharts showing operations of a CPU 610 used in the third embodiment;

Figs. 29A to 29I are drawings for explaining an operation and a performance of the third embodiment;

Fig. 30 shows a rhythm stick 701R for a right hand and a rhythm stick 701L for a left hand used in a fourth embodiment of the present invention;

Fig. 31 is a block diagram for explaining a musical tone generating operation of the fourth embodiment;

Fig. 32 is a drawing for explaining an operation for generating a melody tone in the fourth embodiment;

Fig. 33 is a drawing for explaining an operation for generating an accompaniment tone in the fourth embodiment;

Fig. 34A shows an angle detector which is mounted at a right elbow of the player;

Fig. 34B shows an angle detector which is mounted on a right shoulder of the player;

Fig. 35 shows a detailed appearance of the angle detector shown in Fig. 34A;

Fig. 36 is a perspective view showing a noise generator used in a fifth embodiment of the present invention;

Fig. 37 shows a waveform of an output signal of a microphone provided in the noise generator shown in Fig. 36; and

Fig. 38 is a block diagram showing a circuit constitution of the fifth embodiment of the present invention.

Referring now to the drawings, wherein like reference characters designate like or corresponding parts throughout the several views.

The present invention relates to a musical tone control apparatus which controls the musical tones based on the movement of the object such as a player's hand and the like. This movement of the player's hand, such as a moving speed, a moving force or a moving angle of the object, must be detected by a detector. Hence, first description will be given with respect to [I] DETECTOR, and next description will be given with respect to [II] MUSICAL TONE GENERATING APPARATUS.

[I] DETECTOR

The detector according to the present invention can be classified into an impulse detector, a motion detector, an angular velocity detector and an angle sensor. Hence, description will be given with respect to these detectors and the sensor sequentially.

(1) IMPULSE DETECTOR

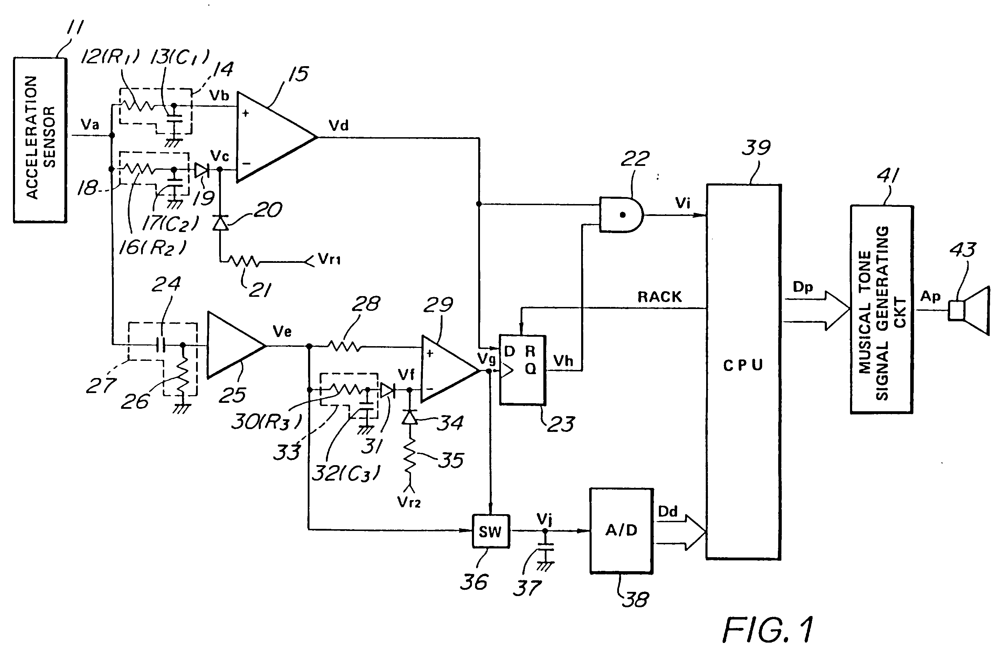

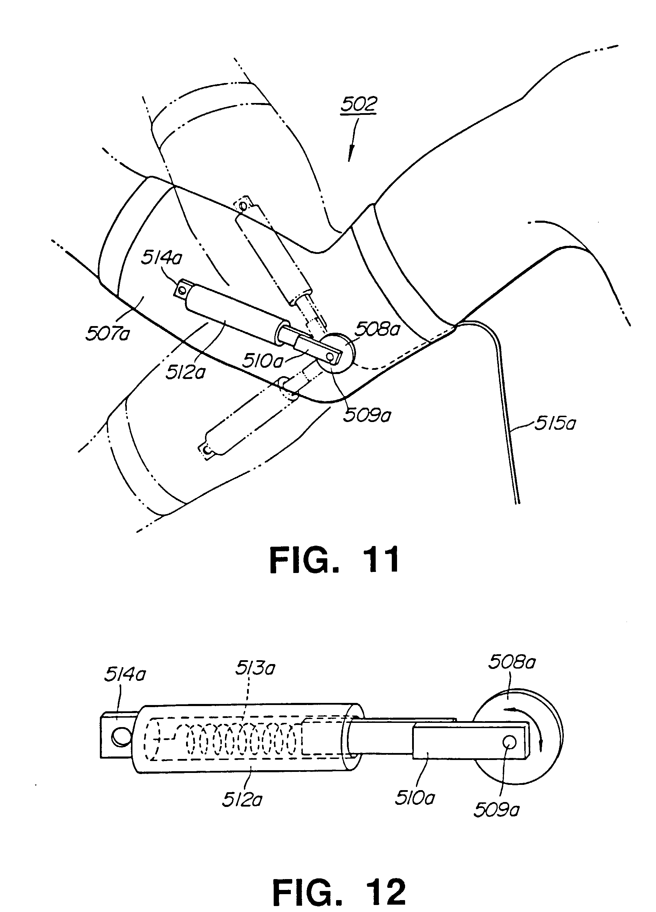

Fig. 1 shows a circuit constitution of an embodiment of the musical tone generating apparatus employing the impulse detector. In Fig. 1, 11 designates an acceleration sensor which has a vibrator made of an organic material or an inorganic material having piezoelectric characteristics. -As such organic material, a piezo-plastic and the like are used. As such inorganic material, a crystal, a Rochelle salt, a barium titanate and the like are used. In the present embodiment, the piezo-plastic is used as an organic vibrator, the circumference of which is fixed so that the vibrator has a diaphragm structure.

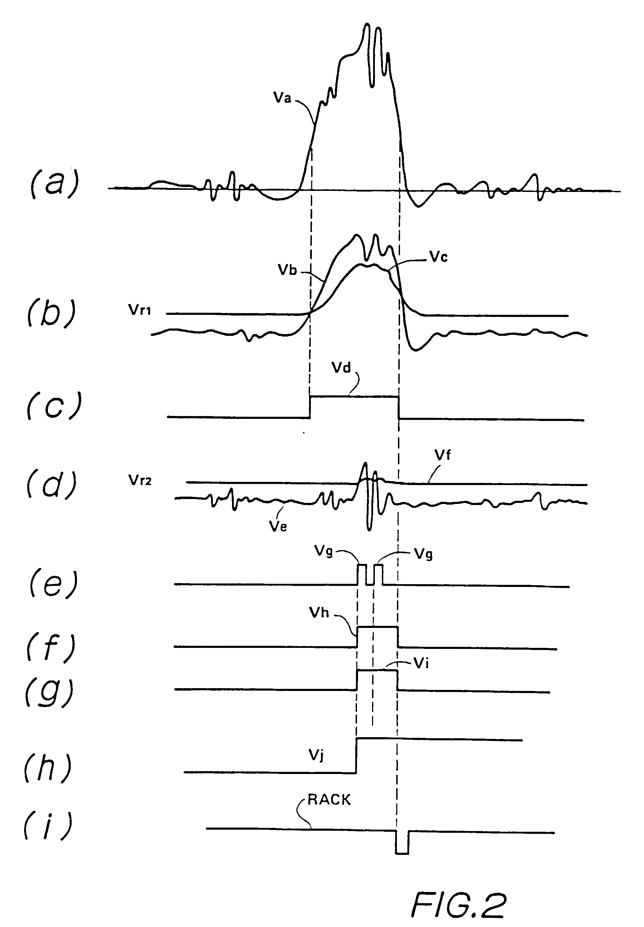

The above-mentioned acceleration sensor 11 converts the acceleration into the voltage signal, hence, the acceleration sensor 11 generates and outputs an output voltage $V_a$ as shown in Fig. 2(a). Next, 12 in Fig. 1 designates a resistor having a resistance of $R_1$ (Ohm), and one terminal of the resistor 12 is connected to an output terminal of the acceleration sensor 11. In addition, 13 designates a capacitor having a capacitance of $C_1$ (F), another terminal of the resistor 12 is grounded via the capacitor 13. These resistor 12 and capacitor 13 constitute a lowpass filter 14 having a time constant of $R_1C_1$ (seconds). The connection point between the resistor 12 and the capacitor 13 is connected to a non-inverting input terminal (+) of a comparator 15. Similar to the resistor 12, one terminal of a resistor 16 having a resistance of $R_2$ (Ohm) is connected to the output terminal of the acceleration sensor 11, and another terminal of the resistor 16 is grounded via a capacitor 17 having a capacitance of $C_2$. These resistor 16 and capacitor 17 constitute a lowpass filter 18 having a time constant of $R_2C_2$ (seconds). In the present embodiment, the time constant $R_2C_2$ is set approximately ten times of the time constant $R_1C_1$. More concretely, the time constant $R_2C_2$ is set equal to 0.5 milli-second and the time constant $R_1C_1$ is set equal to 50 micro-seconds.

The connection point between the resistor 16 and the capacitor 17 is connected to an anode of a diode 19, and an inverting input terminal (-) of the comparator 15 is connected to a cathode of the diode 19. Similar to the diode 19, a cathode of a diode 20 is connected to the inverting input terminal of the comparator 15. One terminal of a resistor 21 is connected to an anode of the diode 20, hence, the diode 20 and the resistor 21 constitutes a serial circuit which supplies a reference voltage $V_{r1}$ to the inverting input terminal of the comparator 15.

One terminal of a capacitor 24 is connected to the output terminal of the acceleration sensor 11, and another terminal of the capacitor 24 is connected to an input terminal of an amplifier 25 which is grounded via a resistor 26. The resistor 26 and the capacitor 24 constitute a highpass filter 27.

One terminal of a resistor 28 is connected to the output terminal of the amplifier 25, and another terminal of the resistor 28 is connected to a non-inverting input terminal (+) of a comparator 29. In addition, one terminal of a resistor 30 having a resistance of $R_3$ (which is provided at an inverting input terminal (-) side of the comparator 29) is connected to the output terminal of the amplifier 25. Another terminal of the resistor 30 is connected to an anode of a diode 31 and is also grounded via a capacitor 32 having a capacitance of $C_3$. The resistor 30 and the capacitor 32 constitute a lowpass filter 32 having a time constant of $R_3C_3$. A cathode of diode 31 is connected to the inverting input terminal of the comparator 29. Similar to the diode 31, a cathode of diode 34 is connected to the inverting input terminal of the comparator 29, whereas an anode of diode 34 is connected to one terminal of a resistor 35. The diode 34 and the resistor 35 constitute a serial circuit which supplies a reference voltage $V_{r2}$ to the inverting input terminal of the comparator 29.

Meanwhile, 22 designates an AND gate having two input terminals, one of which is connected to the output terminal of the comparator 15. In addition, a data input terminal D of a D flip-flop 23 is connected to the output terminal of the comparator 15, and a clock input terminal of the D flip-flop 23 is connected to the output terminal of the comparator 29. Furthermore, the D flip-flop 23 has a reset terminal R, and an output terminal Q of the D flip-flop 23 is connected to another input terminal of the AND gate 22. This D flip-flop 23 stores data supplied to the data input terminal D thereof at a leading edge timing of a pulse signal supplied to the clock input terminal thereof.

Next, an input terminal of an analog switch 36 is connected to the output terminal of the amplifier 25, and a gate terminal of the analog switch 36 is connected to the output terminal of the comparator 29. And an output terminal of the analog switch 36 is connected to an input terminal of an analog-to-digital (A/D) converter 38 which is grounded via a capacitor 37. This capacitor 37 is provided for holding a peak value of an analog signal supplied to the A/D converter 38 via the analog switch 36.

Next, a central processing unit (CPU) 39 is connected to the output terminal of the AND gate 22, the reset terminal R of the D flip-flop 23 and a digital output terminal of the A/D converter 38. The CPU 39 outputs data $D_p$ to a musical tone signal generating circuit 41 wherein a musical tone signal $A_p$ corresponding to the data $D_p$ is generated. The musical tone signal $A_p$ is supplied to a speaker 43 wherein a musical tone corresponding to the musical tone signal $A_p$ is generated.

Next, description will be given with respect to an operation of the musical tone generating apparatus shown in Fig. 1 in conjunction with Fig. 2. The acceleration sensor 11 is mounted on a part of the player, i.e., a palm of the player's hand, for example. This acceleration sensor 11 generates the voltage signal $V_a$ shown in Fig. 2(a) at a timing when the player claps his hands. Such signal $V_a$ is inputted to the non-inverting input terminal of the comparator 15 via the lowpass filter 14, and the signal $V_a$ is also inputted to the inverting input terminal of the comparator 15 via the lowpass filter 18. In this case, the non-inverting input terminal of the comparator 15 is supplied with a signal $V_b b$ (shown in Fig. 2(b)) which is obtained by delaying the signal $V_a$ by a delay time corresponding to the time constant $R_1 C_1$ (sec) of the lowpass filter 14. Similarly, the inverting input terminal of the comparator 15 is supplied with a signal $V_c$ (shown in Fig. 2(b)) which is obtained by delaying the signal $V_a$ by a delay time corresponding to the time constant $R_2 C_2$ (sec) of the lowpass filter 18.

Meanwhile, the diode 19 is inserted between the lowpass filter 18 and the inverting input terminal of the comparator 15. This diode 19 is subject to a bias state in backward direction when the level of the output signal of the lowpass filter 18 is lower than that of the reference voltage $V_{r1}$, whereby the diode 19 is turned off and the reference voltage $V_{r1}$ is supplied to the inverting input terminal of the comparator 15. On the contrary, the diode 19 is subject to a bias state in forward direction when the level of the output signal of the lowpass filter 18 is higher than that of the reference voltage $V_{r1}$, whereby the diode 19 is turned on and the output signal of the lowpass filter 18 is supplied to the inverting input terminal of the comparator 15.

As described before, the time constant $R_1 C_1$ is set smaller than the time constant $R_2 C_2$, hence, the phase of the signal $V_c$ is delayed behind that of the signal $V_b$. As a result, the comparator 15 outputs a pulse signal $V_d$ (shown in Fig. 2(c)), the level of which rises up to a high (H) level while the level of the signal $V_b$ is higher than that of the signal $V_c$. On the other hand, the voltage signal $V_a$ outputted from the acceleration sensor 11 is also supplied to the highpass filter 27 wherein a higher harmonic component signal is extracted from the signal $V_a$. The level of such extracted signal is amplified in the amplifier 25 so that the amplifier 25 outputs a signal $V_e$ as shown in Fig. 2(d).

The signal $V_e$ is supplied to the non-inverting input terminal of the comparator 29 via the resistor 28. In addition, the signal $V_e$ is also supplied to the lowpass filter 33 wherein the signal $V_e$ is subject to a time delay (or an integration operation). As described before, the diode 31 is inserted between the lowpass filter 33 and the inverting input terminal of the comparator 29, and the reference voltage $V_{r2}$ is supplied to the inverting input terminal of the comparator 29. Hence, the reference voltage $V_{r2}$ must be always supplied to the inverting input terminal of the comparator 29 while the level of the output signal of the lowpass filter 33 is lower than that of the reference voltage $V_{r2}$. On the contrary, the output signal of the lowpass filter 33 is supplied to the inverting input terminal of the comparator 29 while the level of the output signal of the lowpass filter 33 is higher than that of the reference voltage $V_{r2}$. As a result, a signal $V_f$ shown in Fig. 2(d) is inputted into the inverting input terminal of the comparator 29.

Thus, the comparator 29 outputs a pulse signal $V_g$ having the H level (as shown in Fig. 2(e)) while the level of the signal $V_e$ is higher than that of the signal $V_f$.

The above-mentioned signal $V_g$ is supplied to the clock input terminal of the D flip-flop 23 as the clock signal. Since the signal $V_d$ (shown in Fig. 2(c)) is supplied to the data input terminal D of the D flip-flop 23, the D flip-flop 23 stores the signal $V_d$ at a leading edge timing of the signal $V_g$ and outputs an output signal $V_h$ (shown in Fig. 2(f)) via an output terminal Q thereof. The logical product of the signals $V_h$ and $V_d$ is obtained in the AND gate 22. Hence, the AND gate 22 outputs a signal $V_i$ (shown in Fig. 2(g)). This signal $V_i$ is supplied to the CPU 39 as an interrupt signal.

On the other hand, when the signal $V_g$ is outputted from the comparator 29, the analog switch 36 is turned on. For this reason, the capacitor 37 is charged by the signal $V_e$, and the peak value of the signal $V_e$ is held by the capacitor 37. Fig. 2(h) shows a waveform of a voltage signal $V_j$ held by the capacitor 37. Such voltage signal $V_j$ is converted into the corresponding digital data $D_d$ in the A/D converter 38, and such digital data $D_d$ are supplied to the CPU 39.

The interrupt signal $V_i$ is supplied to the CPU 39 wherein a signal RACK (shown in Fig. 2(i)) is generated and outputted to the reset terminal R of the D flip-flop 23, whereby the D flip-flop 23 is reset. Thereafter, the CPU 39 stores the digital data $D_d$ outputted from the A/D converter 38. Next, the CPU 39 converts the stored digital data $D_d$ into tone pitch data $D_p$ designating the tone pitch of the musical tone, and the tone pitch data $D_p$ are supplied to the musical tone signal generating circuit 41. The musical tone signal generating circuit 41 generates the musical tone signal designating the tone pitch corresponding to the tone pitch data $D_p$. This musical tone signal is outputted to the speaker 43, whereby the speaker 43 generates the musical tone having the tone pitch corresponding to the intensity of the impulse given to the acceleration sensor 11 mounted on the player's hand.

As described before, the acceleration sensor 11 can be fixed at a predetermined part of the player. According to the constitution of the present embodiment, it is possible to generate a musical tone having a tone pitch corresponding to an intensity of hand clapping, an intensity of step shock occurred between a floor and the feet of the player.

In addition, the present embodiment generates the musical tone having the tone pitch corresponding to the intensity of impulse detected by the acceleration sensor 11. However, the impulse detector is not limited to the present embodiment. For example, it is possible to constitute the impulse detector so that a volume or the tone color of the musical tone is varied in response to the intensity of impulse.

Furthermore, it is possible to constitute the impulse detector so that the tone colors of the musical tones are controlled independently based on the signal $V_b$ (shown in Fig. 2(b)) and the signal $V_e$ (shown in Fig. 2(d)). For example, a musical tone of the bass drum can be controlled by the signal $V_b$, and another musical tone of a cymbal can be controlled by the signal $V_e$. In such a constitution, two kinds of musical tones can be controlled by use of only one detector (i.e., only one acceleration sensor 11).

As described heretofore, the impulse detector can eliminate detecting errors caused by touching noise and the like, and the present impulse detector can detect the intensity of impulse with accuracy.

(2) MOTION DETECTOR

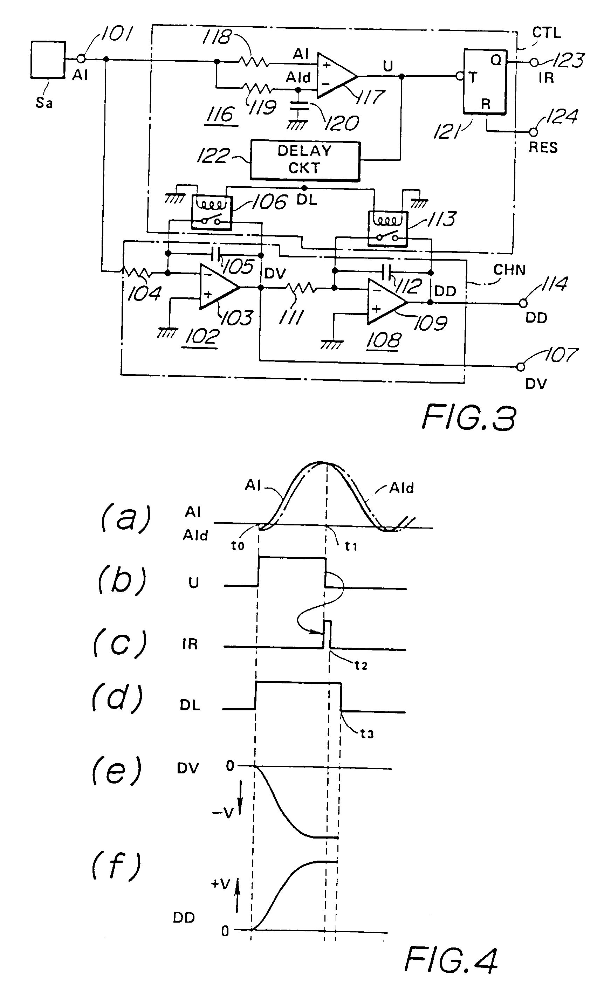

Fig. 3 is a circuit diagram showing an embodiment of a motion detector. More specifically, the circuit shown in Fig. 3 generates signals corresponding to a speed and a moving distance of an object to be detected by integrating an output signal of an acceleration sensor.

In Fig. 3, 101 designates an input terminal which is supplied with an acceleration signal AI outputted from a piezoelectric type acceleration sensor $S_a$.

Meanwhile, a resistor 104 is inserted between the input terminal 101 and an inverting input terminal (-) of an operational amplifier 103, and a capacitor 105 is inserted between the inverting input terminal and the output terminal of the operational amplifier 103. In addition, a non-inverting input terminal (+) of the operational amplifier 103 is grounded. The output terminal of the operational amplifier 103 is connected to a terminal 107 and also connected to an inverting input terminal (-) of an operational amplifier 109 (the non-inverting input terminal of which is grounded) via a resistor 111. The above-mentioned operational amplifier 103, the resistor 104 and the capacitor 105 constitute an integration circuit 102. Both terminals of the capacitor 105 are connected to respective contacts of a reed relay 106.

Similar to the integration circuit 102, the operational amplifier 109, the resistor 111 and a capacitor 112 constitute an integration circuit 108. The output terminal of the integration circuit 108 (i.e., the connection point between the operational amplifier 109 and the capacitor 112) is connected to a terminal 114. Both terminals of the capacitor 112 are connected to respective contacts of a reed relay 113. Both of one terminals of the reed relays 106 and 113 are connected to an output terminal of a delay circuit 122, and both of another terminals of the reed relays 106 and 113 are grounded. In this case, it is possible to displace the reed relays 106 and 113 by semiconductor switches.

The above-mentioned integration circuits 102 and 108 constitute a data converting section CHN.

Next, a non-inverting input terminal of a comparator 117 is connected to the input terminal 101 via a resistor 118. In addition, an inverting input terminal of the comparator 117 is connected to the input terminal 101 and also grounded via a capacitor 120. In this case, the resistor 119 and the capacitor 120 constitue an integration circuit which generates a signal AId by delaying the acceleration signal AI. The output terminal of the comparator 117 is connected to an input terminal T of a flip-flop 121 and also connected to an input terminal of the delay circuit 122.

The above-mentioned comparator 117, the resistors 118 and 119, and the capacitor 120 constitue a phase-shift/peak-detection circuit 116.

This phase-shift/peak-detection circuit 116 compares the level of the acceleration signal AI (which is supplied to the input terminal 101) and that of the signal AId (which is obtained by delaying the acceleration signal AI) and outputs a pulse signal corresponding to the comparing result thereof. For example, when the acceleration signal AI (shown in Fig. 4(a)) is supplied to the input terminal 101 at a time $t_0$, the acceleration signal AI is supplied to the non-inverting input terminal of the comparator 117 via the resistor 118. In addition, the signal AId (as shown by a dashed line in Fig. 4(a)) is generated by delaying the signal AI in the integration circuit (which is consituted by the resistor 119 and the capacitor 120), and this signal AId is supplied to the inverting input terminal of the comparator 117. As a result, the comparator 117 becomes identical to a "1" signal (i.e., a signal having a logical level "1") during times $t_0$ to $t_1$ while the level of the acceleration signal AI is larger than that of the signal AId. As shown in Fig. 4(a), the time $t_1$ is almost identical to a peak time when the level of the acceleration signal AI reaches at a peak level. More specifically, the signal AId is identical to a delay signal of the acceleration signal AI, hence, a time when the level of the signal AId becomes larger than that of the acceleration signal AI must be delayed behind the peak time of the acceleration signal AI. However, it is possible to identify the peak time of the acceleration signal AI with the time when the level of the signal AId becomes larger than that of the acceleration signal AI by properly setting the delay time of the signal AId smaller.

Next, the output signal of the flip-flop 121 is inverted at every time when the level of the input signal U thereof falls down. This flip-flop 121 has an output terminal Q which is connected to a terminal 123 and a reset terminal R which is connected to a terminal 124. The flip-flop 121 outputs a signal IR (shown in Fig. 4(c)) to an external device which outputs a reset signal RES so as to reset the flip-flop 121 when the signal IR rises up to the "1" signal.

The delay circuit 122 delays a trailing edge timing of the signal U so as to enlarge the pulse width of the signal U. As shown in Fig. 4(d), the trailing edge timing $t_3$ of an output signal DL of the delay circuit 122 is delayed behind the trailing edge timing $t_1$ of the signal U by 20 micro-seconds to 100 micro-seconds in the present embodiment.

The above-mentioned phase-shift/peak-detection circuit 116, the delay circuit 122 and the flip-flop 121 constitue a data control section CTL.

Next, description will be given with respect to operations of the motion detector shown in Fig. 3 in conjunction with Figs. 4(a) to 4(f).

When the acceleration signal AI is supplied to the input terminal 101, such acceleration signal AI is simultaneously supplied to the data control section CTL and the data converting section CHN.

First, description will be given with respect to the operation of the data control section CTL.

When the acceleration signal AI is supplied to the phase-shift/peak-detection circuit 116 via the input terminal 101, the output signal U of the phase-shift/peak-detection circuit 116 rises up to the "1" signal. Thereafter, the level of the signal U falls down to a "0" signal (i. e., a signal having a logical level "0") at the time $t_1$ when the amplitude of the acceleration signal AI becomes to the maximum value. At the same time, the output signal IR of the flip-flop 121 rises up to the "1" signal, and such "1" signal is supplied to the external device via the terminal 123. As a result, the external device supplies the reset signal RES to the reset terminal R of the flip-flop 121 via the terminal 124, whereby the signal IR falls down to the "0" signal. On the other hand, when the signal U rises up to the "1" signal, the output signal DL of the delay circuit 122 rises up to the "1" signal. The period while the signal DL is at the "1" signal continues by 20 micro-seconds to 100 micro-seconds after the signal U falls down to the "0" signal. Relay coils of the reed relays 106 and 113 are magnetized (in a period between the times $t_0$ to $t_3$) while the signal DL is at the "1" signal. Thus, the contacts of the reed relays 106 and 113 are opened in the period between the times $t_0$ to $t_3$.

Next, description will be given with respect to the operation of the data converting section CHN.

The integration circuits 102 and 108 do not work while the reed relays 106 and 113 are closed. At the time $t_0$ when the acceleration signal AI is supplied to the input terminal 101, the contacts of the reed relays 106 and 113 are opened and the integration circuits 102 and 108 start to work. More specifically, the integration circuit 102 integrate the acceleration signal AI so as to output a signal DV in the period between the times $t_0$ and $t_3$. Since the signal DV is obtained by integrating the acceleration signal AI in an acceleration increasing period between the times $t_0$ to $t_1$, the value of the signal DV represents a maximum speed at a time when the acceleration increasing period for the object to be detected is ended. On the other hand, the integration circuit 108 integrates the output signal DV of the integration circuit 102 while the output signal DL of the delay circuit 122 is at the "1" signal, so that the integration circuit 108 generates a signal DD. Since the signal DD is obtained by integrating the (speed) signal DV, the value of the signal DD represents a moving distance which is measured until the acceleration of the object becomes identical to the maximum.

As described heretofore, the present embodiment detects the acceleration by every minute period based on the acceleration signal AI outputted from the acceleration sensor $S_a$ and performs an integration operation on the detected acceleration in the minute period (i.e.,

the acceleration increasing period). Hence, the present embodiment can detects characteristics of the motion of the object to be detected.

In addition, the present embodiment can obtain the moving speed and the moving distance of the object to be detected by use of a simple circuit constitution (using three operational amplifiers, one flip-flop and a plurality of resistors, capacitors and reed relays). Hence, the present embodiment can save money.

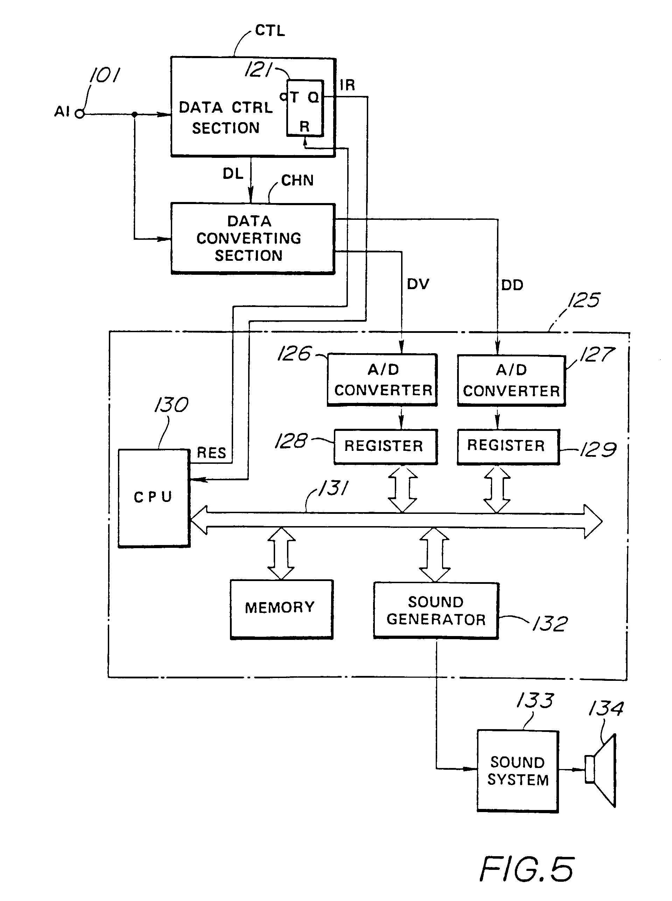

Incidentally, it is possible to apply a musical tone generating unit 125 (as shown in Fig. 5) as an external control device. Next, description will be given with respect to the operation of the circuit shown in Fig. 5.

In Fig. 5, when the flip-flop 121 outputs the signal IR to a central processing unit (CPU) 130 as an interrupt signal, the CPU 130 supplies the reset signal RES to the flip-flop 121. Meanwhile, analog-to-digital converters (A/D converters) 126 and 127 hold the levels of the signals DV and DD at a time $t_2$ (shown in Fig. 4) when the reset signal RES is outputted from the CPU 130. At the same time, the A/D converters 126 and 127 start to convert the held signals DV and DD into respective digital data, and such digital data are stored respectively in the registers 128 and 129. Thereafter, the digital data stored in the registers 128 and 129 are supplied to and stored in the CPU 130 via a data bus 131. Thereafter, the CPU 130 reads out the data stored in the registers 128 and 129 and the read data are supplied to the sound generator 132 via the data bus 131. In this case, the CPU 130 supplies the data stored in the register 128 to the sound generator 132 as volume control data, and the CPU 130 supplies the data stored in the register 129 to the sound generator 132 as tone pitch data. As a result, the sound generator 133 generates and outputs a musical tone signal having a volume and a tone pitch respectively corresponding to the signals DV and DD to a sound system 133. Under the control of the sound system 133, a speaker 134 generates a musical tone corresponding to the signals DV and DD.

The meanings of the above-mentioned signals DV and DD are not limited to the volume and the tone pitch. For example, the signal DV can be modified into a signal for controlling a "regist", and the signal DD can be modified into a signal for controlling a tone color of musical tone (such as tones of a flute, the piano and the like).

The above "regist" represents preset operations of several kinds of levers which are arranged on an operation panel (not shown).

When the regist is controlled by varying the signal DV, the regist condition can be varied in accordance with the movement of the human body and the like. Hence, it is possible to obtain a new musical effect other than the conventional musical effect which is controlled by a manual operation.

(3) ANGULAR VELOCITY DETECTOR

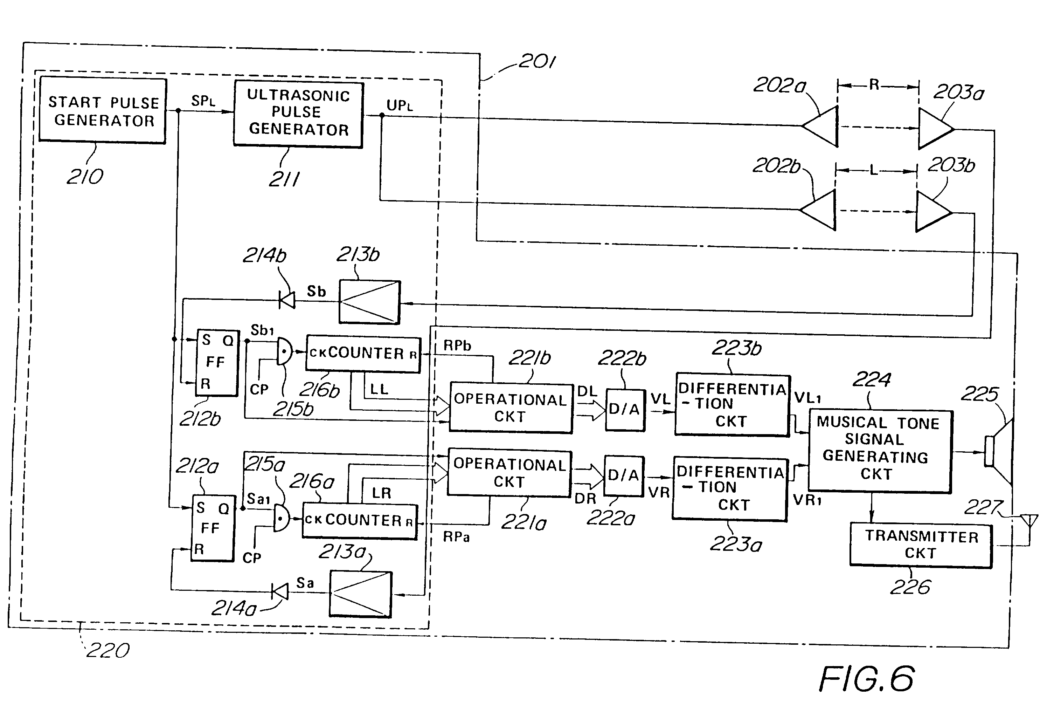

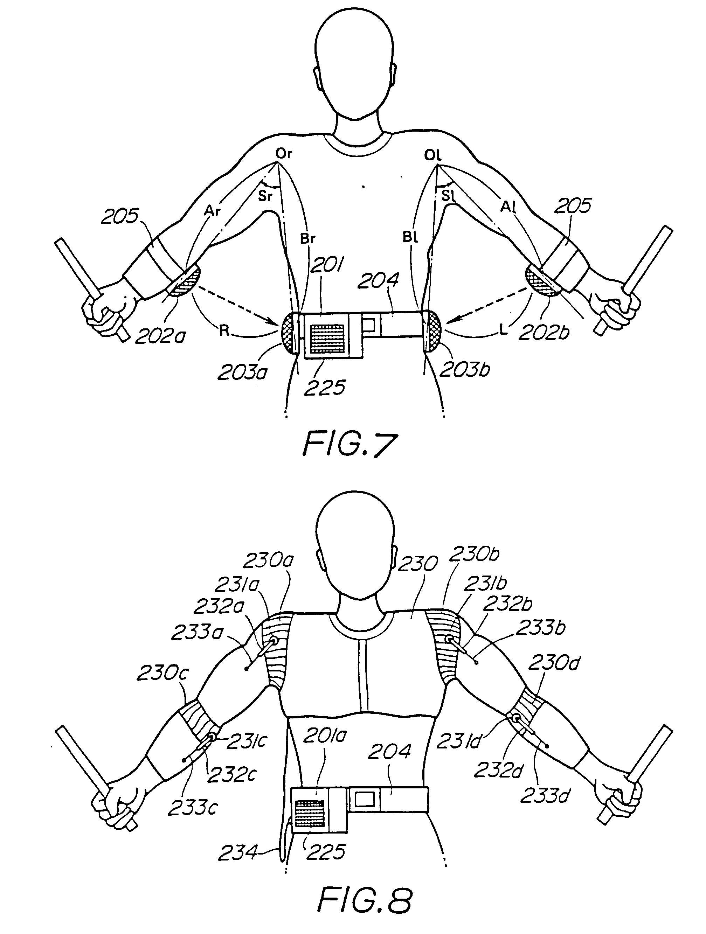

Fig. 6 is a block diagram showing an embodiment of a musical tone generating apparatus employing an angular velocity detector according to the present invention, and Fig. 7 shows a perspective view of the player who wears the musical tone generating apparatus shown in Fig. 6.

In Fig. 6, 201 designates a musical tone generating unit, 202a and 202b designate ultrasonic transmitters, and 203a and 203b designate ultrasonic receivers. As shown in Fig. 7, the musical tone generating unit 201 and the ultrasonic receivers 203a and 203b are worn at a waste of a player by use of a belt 204. The ultrasonic transmitters 202a and 202b are respectively worn at predetermined portions of right and left arms of the player by use of mounting members 205 such as supporters so that the ultrasonic transmitters 202a and 202b respectively face with the ultrasonic receivers 203a and 203b. These ultrasonic transmitters 202a and 202b are constructed by piezoelectric elements such as barium titanate vibrators and the like. When a high frequency voltage is applied to the ultrasonic transmitters 202a and 202b, these ultrasonic transmitters 202a and 202b generate ultrasonic waves. In addition, the ultrasonic receivers 203a and 203b generate the high frequency voltages when these ultrasonic receivers 203a and 203b receives the ultrasonic wave. In this case, two or three transmitting piezoelectric elements are arranged radially within the ultrasonic transmitters 202a and 202b so as to radiate the ultrasonic waves therefrom by an angular range of 180 degrees. Similarly, two or three receiving piezoelectric elements are arranged radially within the ultrasonic receivers 203a and 203b so as to receive and detect the ultrasonic waves radiated from the ultrasonic transmitters 202a and 202b. As a result, even when relative position relations between the ultrasonic transmitters 202a and 202b and the ultrasonic receivers 203a and 203b are changed, the ultrasonic waves radiated from the ultrasonic transmitters 202a and 202b can always reach at the ultrasonic receivers 203a and 203b, regardless of the change of the above relative position relations.

Next, description will be given with respect to the musical tone generating unit 201. In the musical tone generating unit 201, 210 designates a start pulse generator which generates a start pulse $SP_L$ having a constant cycle. This start pulse $SP_L$ is supplied to an input terminal of an ultrasonic pulse generator 211 and respective set input terminals S of reset-set (R-S) flip-flops 212a and 212b. The start pulse $SP_L$ triggers the ultrasonic pulse generator 211 wherein an ultrasonic pulse $UP_L$ is generated and outputted to the ultrasonic transmitters 202a and 202b, whereby the ultrasonic waves having constant cycles are radiated from the ultrasonic transmitters 202a and 202b. When the ultrasonic waves reach at the ultrasonic receivers 203a and 203b, the ultrasonic receivers 203a and 203b generate high frequency voltages respectively.

The high frequency voltage outputted from the ultrasonic receiver 203a is supplied to an amplifier 213a wherein the high frequency voltage is amplified. Thus, the amplifier 213a outputs an amplified signal Sa to a diode 214a wherein the amplified signal Sa is rectified. Thereafter, the diode 214a outputs the rectified signal of the signal Sa to a reset input terminal R of the R-S flip-flop 212a. This R-S flip-flop 212a is set by the start pulse $SP_L$ and reset by the output signal of the diode 214a. Thus, a signal $Sa_1$ outputted from an output terminal Q of the R-S flip-flop 212a has a pulse width which corresponds to a distance R between the ultrasonic transmitter 202a and the ultrasonic receiver 203a. Such signal $Sa_1$ is supplied to one input terminal of an AND gate 215a. While the signal $Sa_1$ is supplied to the AND gate 215a, this signal $Sa_1$ opens the AND gate 215a wherein a clock pulse CP is passed through and supplied to a clock input terminal CK of a counter 216a. The counter 216a counts up the clock pulse CP and outputs a counting value thereof as distance measuring data LR. The value of such distance measuring data LR corresponds to the distance R between the ultrasonic transmitter 202a and the ultrasonic receiver 203a.

Meanwhile, the high frequency voltage generated by the ultrasonic receiver 203b is supplied to an amplifier 213b wherein the high frequency voltage is amplified. Thus, the amplifier 213b outputs an amplified signal Sb to a diode 214b wherein the signal Sb is rectified. Thereafter, the rectified signal of the signal Sb is supplied to a reset input terminal R of the R-S flip-flop 212b. This R-S flip-flop 212b is set by the start pulse $SP_L$ and reset by the output signal of the diode 214b. Thus, a signal $Sb_1$ outputted from an output terminal Q of the R-S flip-flop 212b has a pulse width which corresponds to a distance L between the ultrasonic transmitter 202b and the ultrasonic receiver 203b. Such output signal $Sb_1$ is supplied to one input terminal of an AND gate 215b. While the signal $Sb_1$ is supplied to the AND gate 215b, the signal $Sb_1$ opens the AND gate 215b wherein the clock pulse CP is passing through and supplied to a clock input terminal CK of a counter 216b. This counter 216b counts up the clock pulse CP and outputs the counting value thereof as distance measuring data LL. The value of such distance measuring data LL corresponds to a distance L between the ultrasonic transmitter 202b and the ultrasonic receiver 203b. As described heretofore, an ultrasonic distance measuring circuit 220 is constituted by the above-mentioned elements.

Next, the above distance measuring data LR and LL are supplied respectively to operational circuits 221a and 221b. These operational circuits 221a and 221b are primarily constituted by read only memories (ROM) which work as look-up tables. More specifically, the operational circuit 221a converts the distance measuring data LR into angle data DR, the value of which corresponds to a revolving angle Sr (shown in Fig. 7) at a joint of a right shoulder of the player. Similarly, the operational circuit 221b converts the distance measuring data LL into angle data DL, the value of which corresponds to a revolving angle Sl at a joint of a left shoulder of the player.

As shown in Fig. 7, Ar represents a distance between a revolving center Or at the joint of the right shoulder of the player and a portion where the ultrasonic transmitter 202a is mounted, and Br represents a distance between the revolving center Or and a portion where the ultrasonic receiver 203a is mounted. In this case, the revolving angle Sr can be obtained from the following formula (1) based on a cosine theorem.

$$Sr = \cos^{-1}[(Ar^2 + Br^2 - R^2)/(2 \cdot Ar \cdot Br)] \qquad (1)$$

In the case where the values of the distances Ar and Br are set to predetermined constant values in the above formula (1), the value of the revolving angle Sr can be obtained by putting the value of the distance measuring data LR in the place of the distance R. More specifically, the operational circuit 221a provides the ROM which pre-stores the angle data DR therein, and the operational circuit 221a reads out the angle data DR corresponding to the distance measuring data LR which are inputted into the operational circuit 221a as an address for the ROM. Thus, the operation represented by the formula (1) will be performed in the operational circuit 221a.

Similarly, Al represents a distance between a revolving center Ol at the joint of the left shoulder of the player and a portion where the ultrasonic transmitter 202b is mounted, and Bl represents a distance between the revolving center Ol and a portion where the ultrasonic receiver 203b is mounted. In this case, the revolving angle Sl can be obtained from the following formula (2) based on the cosine theorem.

$$Sl = \cos^{-1}[(Al^2 + Bl^2 - L^2)/(2 \cdot Al \cdot Bl)] \qquad (2)$$

In the case where the values of the distances Al and Bl are set to predetermined constant values in the above formula (2), the revolving angle Sl can be obtained by putting the value of the distance measuring data LL in the place of the distance L. More specifically, the operational circuit 221b provides the ROM which pre-stores the angle data DL therein, and the operational circuit 221b reads out the angle data DL corresponding to the distance measuring data LL which are inputted into the operational circuit 221b as an address for the ROM. Thus, the operation represented by the formula (2) will be performed in the operational circuit 221b.

In addition, the operational circuits 221a and 221b put the respective distance measuring data LR and LL outputted from the counters 216a and 216b therein at leading edge timings of the signals $Sa_1$ and $Sb_1$, i.e., at timings when the R-S flip-flops 212a and 212b are reset. Slightly thereafter, the operational circuits 221a and 221b output respective reset pulses RPa and RPb to reset input terminals R of the counters 216a and 216b so that the counters 216a and 216b are reset. The angle data DR and DL outputted from the operational circuits 221a and 221b are supplied to respective digital-to-analog (D/A) converters 222a and 222b wherein the angle data DR and DL are converted into analog voltage signals VR and VL. Theses voltage signals VR and VL are supplied to respective differentiation circuits 223a and 223b wherein the voltage signals VR and VL are differentiated so as to obtain signals $VR_1$ and $VL_1$. These signals $VR_1$ and $VL_1$ are supplied to a musical tone signal generating circuit 224.

Since the values of the voltage signals VR and VL correspond to the revolving angle Sr at the joint of the right shoulder and the revolving angle Sl at the joint of the left shoulder respectively, the values of the differentiated signals $VR_1$ and $VL_1$ of the voltage signals VR and VL correspond to the respective revolving angles Sr and Sl.

The musical tone signal generating circuit 224 generates percussive tones (such as a drum tone, a cymbal tone and the like) in accordance with a predetermined rhythm pattern having a performance speed corresponding to the values of the signals $VR_1$ and $VL_1$ outputted from the respective differentiation circuits 223a and 223b. In this case, the performance speed is increased in response to the value of the signal $VR_1$, and the performance speed is decreased in response to the value of the signal $VL_1$. In the present embodiment, the performance speed can be increased approximately to ♩ = **90**. In other words, the performance speed can be increased such that a quarter note ( ♩ ) can be generated by ninty times in one minute. The musical tone signal generated in the musical tone signal generating circuit 224 is supplied to a speaker 225, whereby the speaker 225 generates the percussive tone in accordance with the predetermined rhythm pattern having the performance speed corresponding to revolving angular velocities of the right and left arms of the player. Incidentally, 226 designates a transmitter circuit which transmits the musical tone signal outputted from the musical tone signal generating circuit 226 via an antenna 227 by a radio communication.

As described heretofore, the present embodiment measures the distance R between the ultrasonic transmitter 202a and the ultrasonic receiver 203a and calculates the revolving angle Sr of the right arm with respect to the direction of the player's body based on the measured distance R. Then, the value of the revolving angle Sr is differentiated in the differentiation circuit 223a, so that the value of the revolving angular velocity of the right arm can be obtained. Similarly, the present embodiment measures the distance L between the ultrasonic transmitter 202b and the ultrasonic receiver 203b and calculates the revolving angle Sl of the left arm with respect to the direction of the player's body based on the measured distance L. Then, the value of the revolving angle Sl is differentiated in the differentiation circuit 223b, so that the value of the revolving angular velocity of the left arm can be obtained. Accordingly, it is possible to vary the performance speed of the musical tones in accordance with the revolving angular velocities of the right and left arms of the player.

Next, description will be given with respect to another embodiment of the musical tone generating apparatus employing the angular velocity detector according to the present invention in conjunction with Fig. 8.

In Fig. 8, 230 designates a mounting wear covering a breast, shoulders and elbows at an upper half of the player's body. Similar to an ordinary jacket, the mounting wear 230 can be taken off. In addition, shoulder portions 230a and 230b, and elbow portions 230c and 230d of the mounting wear 230 are made of a flexible fiber material. Furthermore, thin type absolute rotary encoders 231a to 231d are mounted respectively in the shoulder portions 230a and 230b, and the elbow portions 230c and 230d. These rotary encoders 231a to 231d have respective shafts fixed with levers 232a to 232d, the tip end portions of which are mounted on the mounting wear 230 via absorber members 233a to 233d. Therefore, when the player revolves his right or left hand, the rotary encoder 231a directly detects the revolving angle of the joint of the right shoulder, or the rotary encoder 231b directly detects the revolving angle of the joint of the left shoulder. On the other hand, in the case where the player bends his right or left elbow, the rotary encoder 231c directly detects the bending angle of the joint of the right elbow, or the rotary encoder 231d directly detects the bending angle of the joint of the left elbow.

Thus, the rotary encoders 231a to 231d output respective angle data (i.e., respective digital signals each having a predetermined bit number) to a musical tone generating unit 201a via a cable 234. The musical tone generating unit 201a is constituted by four digital-to-analog (D/A) converters, four differentiation circuits (both not shown), and the musical tone signal generating circuit 224, the speaker 225 and the transmitter circuit 226 shown in Fig. 6. The above four D/A converters convert the respective angle data (supplied from the rotary encoders 231a to 231d) into analog voltage signals, and these analog voltage signals are differentiated respectively in the four differentiation circuits. In this case, the musical tone signal generating circuit 224 generates a musical tone signal representing a percussive tone having a predetermined rhythm pattern and the performance speed corresponding to the values of voltage signals supplied from the four differentiation circuits.

Therefore, the performance speed will be increased in response to the revolving angular velocity of the joint of the right shoulder, and the performance speed will be decreased in response to the revolving angular velocity of the joint of the left shoulder. In this case, the performance speed can be increased approximately to ♩ =**90** in response to the revolving angular velocities of the joints of these shoulders. In addition, the performance speed can be increased in response to the revolving angular velocity of the joint of the right elbow, and the performance speed can be decreased in response to the revolving angular velocity of the joint of the left elbow. In this case, the performance speed can be increased approximately to ♩ =**150** to 180 in response to the revolving angular velocities of the joints of these elbows.

According to another embodiment described above, it is possible to arbitrarily vary the performance speed of the percussive tones generated from the speaker 225 of the musical tone generating unit 201a in response to the revolving angular velocities of the joints of the shoulders and the elbows. In addition, the rotary encoders 231a and 231b detect the revolving angular velocities of the joints of the right and left shoulders, even when the player revolves his right and left arms in right and left directions or in forward and backward directions. Hence, the player can move freely, so that it is possible to raise the degree of freedom for a dance composition of the player and the like. Furthermore, the rotary encoders 231a to 231d are mounted within the mounting wear 230 like the ordinary jacket, hence, the mounting wear 230 can be made fashionably so that the mounting wear 230 is prevented from damaging the appearance of the player.

In the above-mentioned embodiments, the angle data (digital data) DR and DL are converted into respective analog voltage signals VR and VL, which are differentiated so as to obtain the analog signals $VR_1$ and $VL_1$ the values of which correspond to the revolving angular velocities. Thereafter, these analog signals $VR_1$ and $VL_1$ are supplied to the musical tone signal generating circuit 224 as musical tone control signals. However, it is possible to constitute the musical tone generating apparatus so that difference data are directly obtained from the angle data DR and DL and such difference data (the values of which corresponds to the revolving angular velocities) are supplied to the musical tone signal generating circuit as the musical tone control data. In addition, it is possible to constitute the musical tone generating apparatus so that data of detected revolving angular velocities can be applied to the musical tone control data or predetermined musical tone control data can be formed based on the detected revolving angular velocities.

Meanwhile, the performance speed is varied in response to the revolving angular velocities of player's arms or in response to the revolving angular velocities of the joints of the player's shoulders and the player's elbows in the above-mentioned embodiments. However, it is possible to constitute the present invention such that the tone pitch, the volume, a tone length, the tone color or the like is varied in response to the above revolving angular velocities. In addition, it is possible to constitute the present invention such that musical tone parameters can be controlled by the above revolving angular velocities or the musical tone parameters can be controlled by an arbitrary combination of the above revolving angular velocities.

In addition, the revolving angular velocities of the player's shoulders and the player's elbows are detected in the present embodiments. However, it is possible to detect revolving angular velocities of player's knees in the present invention.

Furthermore, it is unnecessary to provide the musical tone signal generating circuit and the speaker within the musical tone generating unit. Hence, it is possible to constitute the musical tone generating unit such that the musical tone generating unit outputs the musical tone control data therefrom based on the known MIDI (Musical Instrument Digital Interface) standard , for example. In this case, such musical tone control data are supplied to an external musical tone signal generating circuit.

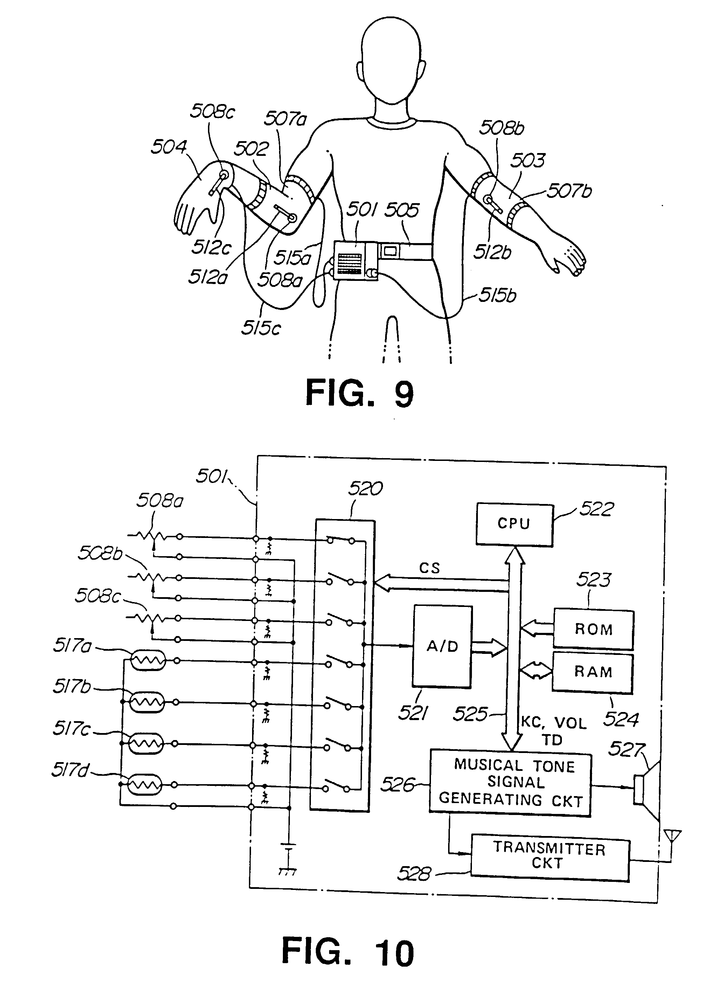

Fig. 9 shows an appearance of a player who is mounted with a second embodiment of the musical tone control apparatus according to the present invention, and Fig. 10 is a block diagram showing an electric constitution of the second embodiment. The second embodiment is constituted by a control unit 501, a detecting section 502 for the player's right elbow, a detecting section 503 for the player's left elbow and a detecting section 504 for the player's right hand. The control unit 501 is mounted at the player's waste by a belt 505. The detecting sections 502, 503 and 504 are respectively mounted at the right elbow, the left elbow and the right hand of the player. The control unit 501 includes a musical tone control apparatus, a musical tone generating circuit (which is controlled by the musical tone control apparatus) and a speaker. Next, description will be given with respect to

respective constitutions of the detecting sections 502, 503 and 504. The detecting section 502 is constructed as shown in Fig. 11. In Fig. 11, 507a designates a mounting member such as a supporter made of flexible fiber materials, and this mounting member 507a has a shape which is fitted for the right elbow. A thin type potentiometer 508a is mounted at a predetermined portion of the mounting member 507a covering the joint of the player's right elbow. A lever 510a is fixed at a shaft 509a of the potentiometer 508a, and the tip end portion of the lever 510a can be freely put out and put in a cylinder 512a as shown in Fig. 12. Within the cylinder 512a, a spring 513a for pulling the lever 510a is provided. In addition, a fixing portion 514a is formed at an edge portion of the cylinder 512a, and this fixing portion 514a is mounted at the center of the arm portion of the mounting member 507a. When the above-mentioned mounting member 507a is worn at the player's right elbow as shown in Fig. 11 and the player stretches and bends his right elbow, the lever 510a and the cylinder 512a are vibrated in response to the stretching and bending movement of the player's right elbow so that the shaft 509a is revolved. As a result, a detection signal (a voltage signal) corresponding to the revolving angle of the shaft 509a (i.e., the bending angle of the player's right elbow) is generated in the potentiometer 508a, and such detection signal is supplied to the control unit 501 via a cable 515a. On the other hand, the detecting section 503 is constructed by elements 507b to 515b which are similar to the elements 507a to 515a of the detecting section 502, hence, the detailed description of the construction of the detecting section 503 will be omitted.

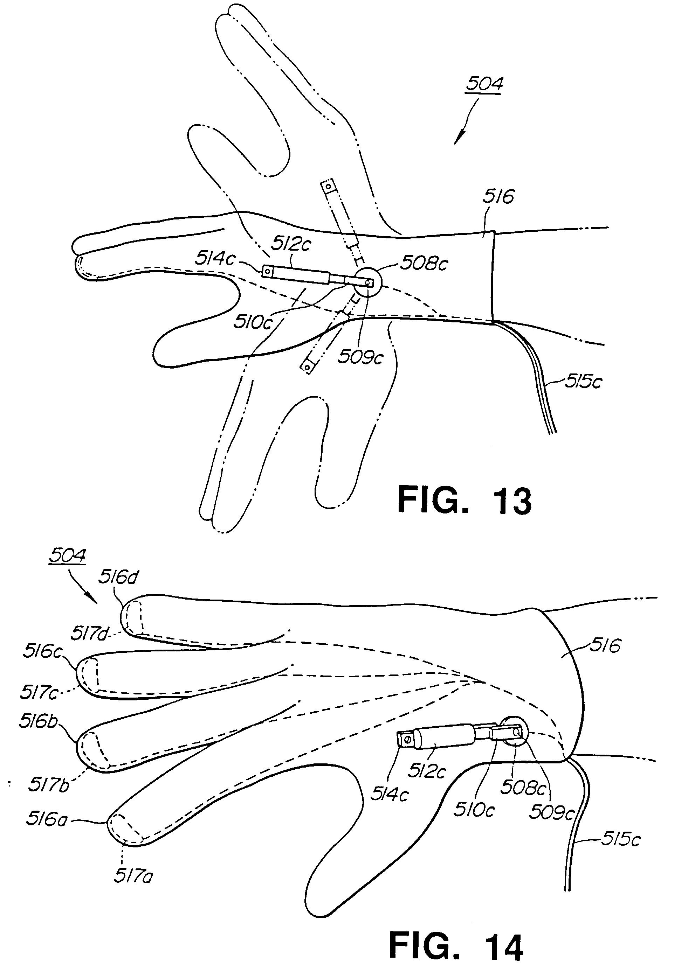

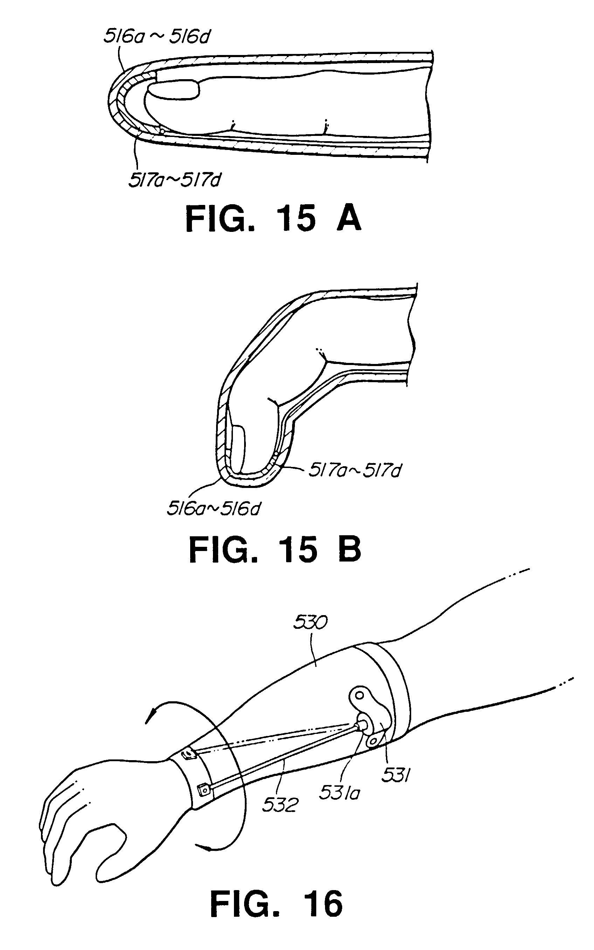

Next, description will be given with respect to the construction of the detecting section 504 in conjunction with Figs. 13 and 14. In Figs. 13 and 14, 516 designates a glove made of flexible fiber materials, and a potentiometer 508c is mounted at a portion of the glove 516 covering the joint of the player's right hand. Similar to the detecting section 502, a lever 510c is fixed at the edge portion of the shaft 509c of the potentiometer 508c, and the lever 510c can be freely put out and in a cylinder 512c. In addition, a fixing portion 514c is formed at an edge portion of the cylinder 512c, and the fixing portion 514c is attached at the base of fingers of the glove 516. When the player wears the glove 516 mounted with the detecting section 504 as shown in Fig. 13 and the player bends his right hand up and down, the shaft 509c will be revolved and the potentiometer 508c generates a detection signal (a voltage signal), the value of which corresponds to a bending angle of the player's right hand. Such detection signal is supplied to the control unit 501 via a cable 515c. Meanwhile, pressure sensitive elements 517a to 517d are provided in the inside of the finger tip portions 516a to 516d of the glove 516. Each of these pressure sensitive elements 517a to 517d has a specific resistance which varies in response to the pressure given by each finger of the player's right hand. As shown in Fig. 15A, there is provided a small space in each of the finger tip portions 516a to 516d of the glove 516 when the player stretches his fingers of his right hand, hence, the pressure is not given to each of the pressure sensitive elements 517a to 517d at this state. On the contrary, when the player bends his fingers of his right hand as shown in Fig. 15B, the pressure in response to the bending angle of each finger tip must be worked on each of the pressure sensitive elements 517a to 517d, the specific resistance of which will be varied. Thus, each pressure sensitive element generates the detection signal having a value corresponding to the bending angle of each finger tip, and such detection signal will be supplied to the control unit 501 via the cable 515c. Incidentally, it is possible to use a piezoelectric element for generating a voltage corresponding to the given pressure thereof as the pressure sensitive element.

Next, 520 shown in Fig. 10 designates an analog multiplexer having seven channels. Such analog multiplexer 520 selects one of the detection signals from the potentiometers 508a to 508c and the detection signals from the pressure sensitive elements 517a to 517d based on a channel select signal CS which is supplied to a select terminal of the analog multiplexer 520. Then the analog multiplexer 520 supplies the selected detection signal to an A/D converter 521 wherein the selected detection signal is converted into digital detection data of predetermined bits. In addition, 522 designates a CPU, 523 designates a ROM for storing programs used in the CPU 522, and 524 designates a RAM which is used as a work area. The CPU 522 generates the channel select signal CS, the value of which is sequentially varied. Such channel select signal CS is supplied to the analog multiplexer 520, whereby the analog multiplexer 520 scans the output signals of the potentiometers 508a to 508c and the pressure sensitive elements 517a to 517d with a relatively high speed. Hence, the CPU 522 judges the bending angles of the player's right elbow and the player's left elbow in accordance with predetermined four angles based on the detection data outputted from the A/D converter 521. Then, the CPU 522 generates key code data KC in response to a combination of the bending angles of the player's right elbow and the player's left elbow based on the above judging result. In addition, the CPU 522 judges the bending angle of the player's right hand in accordance with predetermined three angles based on the detection data corresponding to the detection signal from the potentiometer 508c. More specifically, the CPU 522 generates the tone volume data VOL representative of the tone volume (which can be classified by large, medium and small tone volumes) in response to the bending angle of the player's right hand. Furthermore, the CPU 522 judges whether each of an index finger, a middle finger, a third finger and a little finger of the player's right hand is bent or not based on the detection data corresponding to the detection signals from the pressure sensitive elements 517a to 517d. Based on this judging result, the CPU 522 generates tone color select data TD for selecting a tone color (such as a tone color of the piano, the organ, a flute, a saxophone, a clarinet or the like) in response to a combination of bent fingers.

The CPU 522 supplies the above-mentioned key code data KC, the volume data VOL and the tone color select data TD (i.e., the musical tone control data) to a musical tone signal generating circuit 526. Hence, the musical tone signal generating circuit 526 generates a musical tone signal having a tone pitch corresponding to the key code data KC, a tone volume corresponding to the tone volume data VOL and a tone color corresponding to the tone color select data TD. Thus, a speaker 527 generates a musical tone corresponding to a musical tone signal generated in the musical tone signal generating circuit. Meanwhile, a transmitter circuit 528 transmits the musical tone signal outputted from the musical tone signal generating circuit 526 by wireless.

According to the above-mentioned second embodiment, it is possible to vary the tone pitch of the musical tone generated from the speaker 527 of the control unit 501 in response to the combination of the bending angles of the joints of the player's right and left elbows. In addition, it is possible to vary the tone volume of the musical tone by the three predetermined tone volumes in response to the bending angle of the joint of the player's right wrist. Furthermore, it is possible to vary the tone color of the musical tone in response to the combination of the bending fingers within the index finger, the middle finger, the third finger and the little finger of the player's right hand.

In the second embodiment, the tone pitch and the like are controlled based on the detection result of the potentiometer 508a to 508c which detect the bending angles of the joints of the player's elbows and the player's wrist. As shown in Fig. 16, it is possible to modify the second embodiment such that a potentiometer 531 is mounted at the inside of a mounting member 530 such as a supporter covering the player's arm; a certain bending is given to a shaft 531a of the potentiometer 531; an edge portion of the shaft 531a is fixed at an edge portion of a rod 532 made of plastics having a small twist characteristic; another edge portion of the rod 532 is attached to the inside of wrist portion of the mounting member 530. Thus, a twist angle of the player's arm (or a revolving angle of the player's wrist) is detected, whereby the tone pitch, the tone color and the tone volume are controlled based on such detecting result.

(1) FIRST MODIFIED EMBODIMENT OF SECOND EMBODIMENT

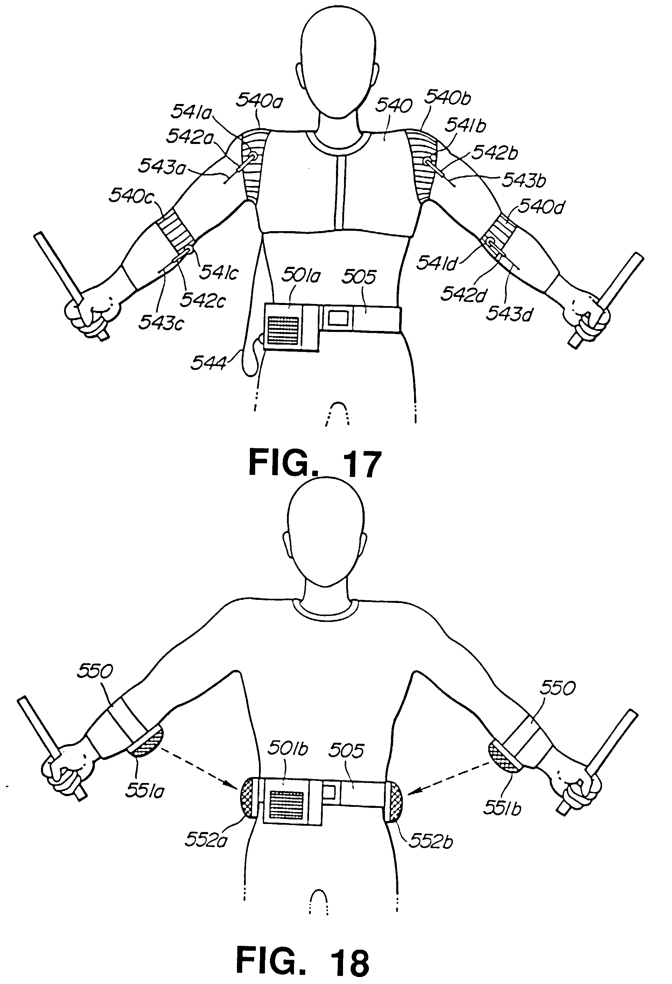

Next, description will be given with respect to a first modified embodiment of the second embodiment in conjunction with Fig. 17.

In Fig. 17, 540 designates a mounting wear covering the breast, shoulders and elbows of the upper half of the player's body. Similar to the ordinary wear, this mounting wear 540 can be taken off. In such mounting wear 540, shoulder portions 540a and 540b, and elbow portions 540c and 540d are made of flexible fiber materials. In addition, thin type absolute rotary encoders 541a to 541d are mounted respectively at the shoulder portions 540a and 540b, and the elbow portions 540c and 540d. These rotary encoders 541a to 541d have respective shafts, the edge portions of which are fixed to levers 542a to 542d. The edge portions of the levers 542a to 542d are mounted to a mounting member 540 via respective absorber members 543a to 543d made of flexible materials such as a rubber and the like. When the player revolves his right or left arm in his body direction, the rotary encoder 541a detects the revolving angle at the joint of the player's right shoulder, and the rotary encoder 541b detects the revolving angle of the joint of the player's left shoulder. In addition, when the player bends his right or left elbow, the rotary encoder 541c detects the bending angle of the joint of the player's right elbow, and the rotary encoder 541d detects the bending angle of the joint of the player's left elbow. These rotary encoders 541a to 541d generate angle detecting signals based on the detecting results thereof, and these angle detecting signals are supplied to the control unit 501a mounted at the player's waste by the belt 505 via a cable 544. Similar to the control unit 501 shown in Fig. 10, the control unit 501a comprises the CPU 522, the ROM 523, the RAM 524, the bus line 525, the musical tone signal generating circuit 526, the speaker 527, the transmitter circuit 527 and further comprises registers for once storing the angle detecting signals outputted from the rotary encoders 541a to 541d.

According to the above first modified embodiment, the CPU 522 sequentially reads the angle detecting signals stored in the above registers so as to generate tempo data representing the performance speed of the generated musical tones. Such tempo data are supplied to the musical tone signal generating circuit 526 via the bus line 525. Hence, the musical tone signal generating circuit 526 generates the musical tone signal (for generating a percussive tone such as the drum tone, the cymbal tone and the like) having the performance speed corresponding to the tempo data and also having the predetermined rhythm pattern. In this case, the CPU 522 judges the revolving angles of the joints of the player's shoulders in accordance with predetermined five angles, and the performance speed can be raised approximately to ♩ = 90 based on the judging result of the CPU 522. In addition, the CPU 522 judges the bending angles of the joints of the player's elbows in accordance with predetermined four angles, and the performance speed can be raised approximately to ♩ =150 to 180 based on the judging results of the CPU 522.

According to the above first modified embodiment, the performance speed of the percussive tone generated from the speaker 527 can be freely varied in response to the revolving angles of the joints of the player's shoulders and the bending angles of the joints of the player's elbows. Similar to the second embodiment described before, this first modified embodiment can be constituted such that the key code data KC, the tone volume data VOL and the tone color select data TD can be generated based on the angle detecting data obtained by the rotary encoders 541a to 541d, and the tone pitch, the tone volume and the tone color can be controlled based on these respective data.

(2) SECOND MODIFIED EMBODIMENT

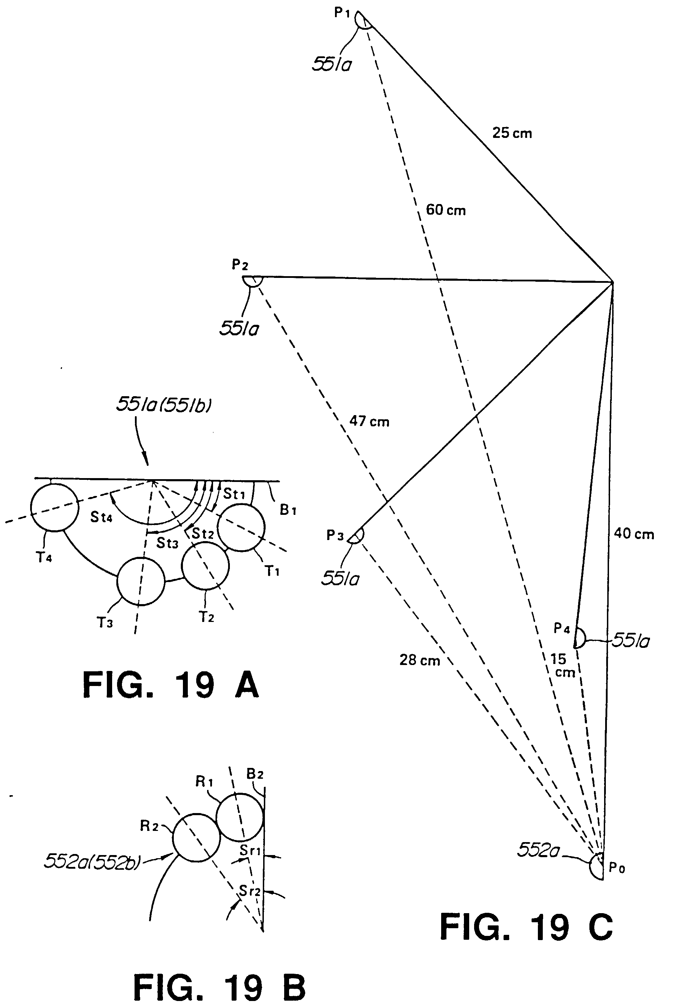

Next, description will be given with respect to a second modified embodiment of the second embodiment. As shown in Fig. 18, the apparatus according to the second modified embodiment comprises ultrasonic transmitters 551a and 551b, ultrasonic receivers 552a and 552b, and a control unit 501b. Theses ultrasonic transmitters 551a and 551b are respectively mounted to insides of the player's right and left arms by a mounting member 550 such as a supporter, and the ultrasonic receivers 552a and 552b are mounted at the player's waste by the belt 505. In addition, these transmitters 551a and 551b and receivers 552a and 552b are constructed by the piezoelectric elements such as barium titanate vibrators. When the high frequency voltage is supplied to the transmitters 551a and 551b, the transmitters 551a and 551b generate the ultrasonic waves. When the receivers 552a and 552b receives the ultrasonic waves, the receivers 552a and 552b generate the high frequency voltages. As shown in Fig. 19A, each of the transmitters 551a and 551b is constructed by four transmitting piezoelectric elements $T_1$ to $T_4$ which are arranged by respective angles $St_1$ to $St_4$ with respect to a base plane $B_1$, On the other hand, as shown in Fig. 19B, each of the receivers 552a and 552b is constructed by two receiving piezoelectric elements $R_1$ and $R_2$ which are arranged by respective angles $Sr_1$ and $Sr_2$ with respect to a base plane $B_2$.

Thus, as shown in Fig. 19C, a position of the transmitter 551a is changed as shown by positions $P_1$, $P_2$, $P_3$ and $P_4$ with respect to a position $P_0$ of the receiver 552a which is mounted at the player's waste while the player swings down his right arm. In this case, the ultrasonic wave transmitted from the transmitter 551a must be reached at the receiver 552a, regardless of a relative position relation between the transmitter 551a and the receiver 552a. For example, in the case where a distance between the player's right shoulder and the transmitter 551a is set to 25 cm and a distance between the player's right shoulder and the receiver 552a is set to 40 cm, the angle $St_1$ to $St_4$ and $Sr_1$ and $Sr_2$ must be set as $St_1$=28 degrees, $St_2$=58 degrees, $St_3$=97 degrees, $St_4$=165 degrees, $Sr_1$=13 degrees and $Sr_2$=38 degrees. In this case, a distance between the positions $P_0$ and $P_1$ is equal to 60 cm, a distance between the positions $P_0$ and $P_2$ is equal to 47 cm, a distance between the positions $P_0$ and $P_3$ is equal to 28 cm, and a distance between the positions $P_0$ and $P_4$ is equal to 15 cm.

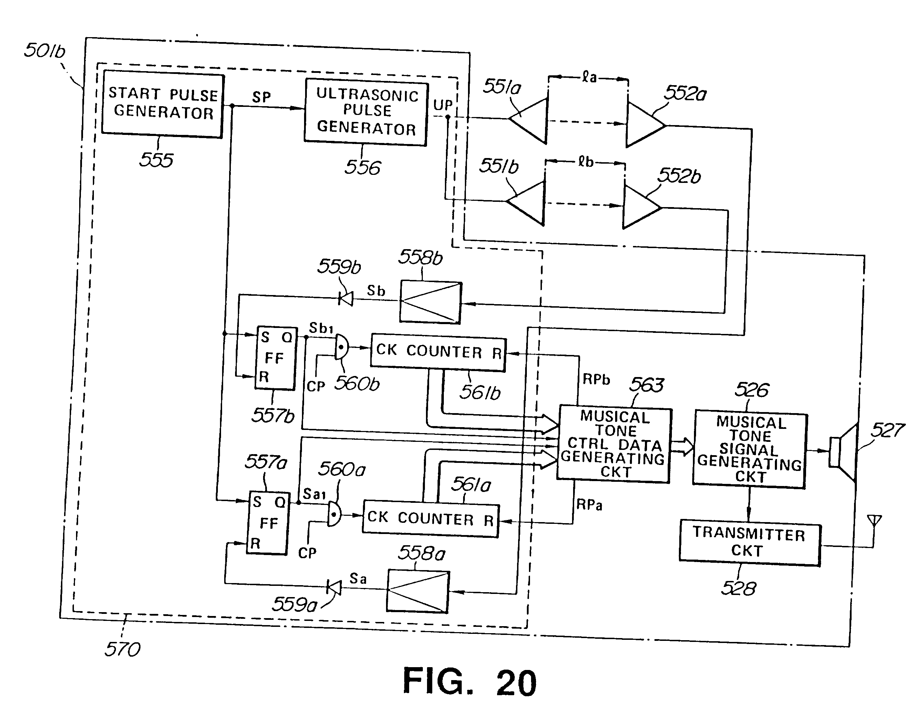

Next, description will be given with respect to an electric constitution of the apparatus according to the second modified embodiment in conjunction with Fig. 20. In Fig. 20, a start pulse generator 555 generates a start pulse SP having a constant cycle. Such start pulse SP is supplied to an input terminal of an ultrasonic pulse generator 556, and set input terminals S of R-S flip-flops 557a and 557b. The above start pulse SP triggers the ultrasonic pulse generator 556 so that the ultrasonic pulse generator 556 outputs an ultrasonic pulse UP to the transmitters 551a and 551b. Thus, the transmitters 551a and 551b transmit respective ultrasonic waves each having a constant cycle to the receivers 552a and 552b wherein the high frequency voltages are generated. The receiver 552a outputs the high frequency voltage to an amplifier 558a wherein the high frequency voltage is amplified, and an amplified signal $S_a$ is rectified in a diode 559a and then supplied to a reset input terminal R of a R-S flip-flop 557a. Hence, the R-S flip-flop 557a is set by the start pulse SP and reset by an output signal of the diode 559a. Therefore, the R-S flip-flop 557a outputs an output signal $S_{a1}$ from an output terminal Q thereof, and such output signal $S_{a1}$ has a pulse width the value of which corresponds to a distance la between the transmitter 551a and the receiver 552a. This output signal $S_{a1}$ is supplied to one input terminal of an AND gate 560a, whereby the AND gate 560a is subject to an open state so that a clock pulse CP is supplied to a clock input terminal CK of a counter 561a via the AND gate 560a in a pulse width period of the signal $S_{a1}$. Hence, the counter 561a counts up the clock pulse CP so as to output the count value thereof. Such count value corresponds to the distance la between the transmitter 551a and the receiver 552a. In other words, such count value corresponds to the revolving angle of the player's right arm which is swung down to his body.

On the other hand, the high frequency voltage outputted from the receiver 552b is amplified in an amplifier 558b, and an amplified signal $S_b$ is rectified in a diode 559b and then supplied to a reset input terminal R of a R-S flip-flop 557b. Similar to the R-S flip-flop 557a, the R-S flip-flop 557b is set by the start pulse SP and reset by an output signal of the diode 559b. Therefore, the R-S flip-flop 557b outputs an output signal $S_{b1}$ from an output terminal Q thereof, and such output signal $S_{b1}$ has a pulse width the value of which corresponds to a distance lb between the transmitter 551b and the receiver 552b. This signal $S_{b1}$ is supplied to one input terminal of an AND gate 560b, whereby the AND gate 560b is subject to the open state so that the clock pulse CP is supplied to a clock input terminal CK of a counter 561b via the AND gate 560b in a pulse width period of the signal $S_{b1}$. The counter 561b counts up the clock pulse CP so as to output a count value thereof. Such count value corresponds to the distance lb between the transmitter 551b and the receiver 552b. In other words, such count value corresponds to the revolving angle of the player's left arm which is swung down to his body.

An ultrasonic measuring circuit 570 is constituted as described heretofore. The above-mentioned count values of the counters 561a and 561b are supplied to a musical tone control data generating circuit 563. The count value of the counter 561a is inputted into the musical tone control data generating circuit 563 at a trailing edge timing of the signal $S_{a1}$ (i.e., a timing when the R-S flip-flop 557a is reset). Slightly thereafter, the musical tone control data generating circuit 563 supplies a reset pulse RPa to a reset input terminal R of the counter 561a so that the counter 561a is reset. Similarly, the count value of the counter 561b is inputted into the musical tone control data generating circuit 563 at a trailing edge timing of the signal $S_{b1}$ (i.e., a timing when the R-S flip-flop 557b is reset). Slightly thereafter, the musical tone control data generating circuit 563 supplies a reset pulse RPb to a reset input terminal R of the counter 561b so that the counter 561b is reset.

Next, the musical tone control data generating circuit 563 generates and outputs musical tone control data (i.e., the data KC, VOL and TD described before) to the musical tone signal generating circuit 526. Thus, the musical tone signal generating circuit 526 generates the musical tone signal whose tone pitch, tone color and tone volume (or a performance speed) are varied based on the value of the musical tone control data. Such musical tone signal is outputted to the speaker 527. Hence, the speaker 527 generates a musical tone corresponding to the revolving angles of the player's right and left arms which are swung down to his body.

According to the second modified embodiment described above, it is possible to detect the revolving angle of the player's right arm which is swung to his body based on a period for transmitting the ultrasonic wave between the transmitter 551a mounted at his right arm and the receiver 552a mounted at his right waste. In addition, it is possible to detect the revolving angle of the player's left arm which is swung down to his body based on a period for transmitting the ultrasonic wave between the transmitter 551b mounted at his left arm and the receiver 552b mounted at his left waste. Thus, it is possible to generate the musical tone corresponding to the revolving angles of the player's right and left arms.

Incidentally, it is possible to further modify the second modified embodiment such that the tone pitch, the tone color and the tone volume of the musical tone or the performance speed are varied in response to the revolving angles of the player's right and left arms. In addition, it is possible to vary the performance speed in response to the bending angles of the player's elbows and it is also possible to vary the tone pitch of the musical tone in response to the bending angles of the player's fingers in the second modified embodiment. As described heretofore, it is possible to combine the second modified embodiment and other embodiments described before so as to realize a flexible musical tone control system.

## (C) THIRD EMBODIMENT

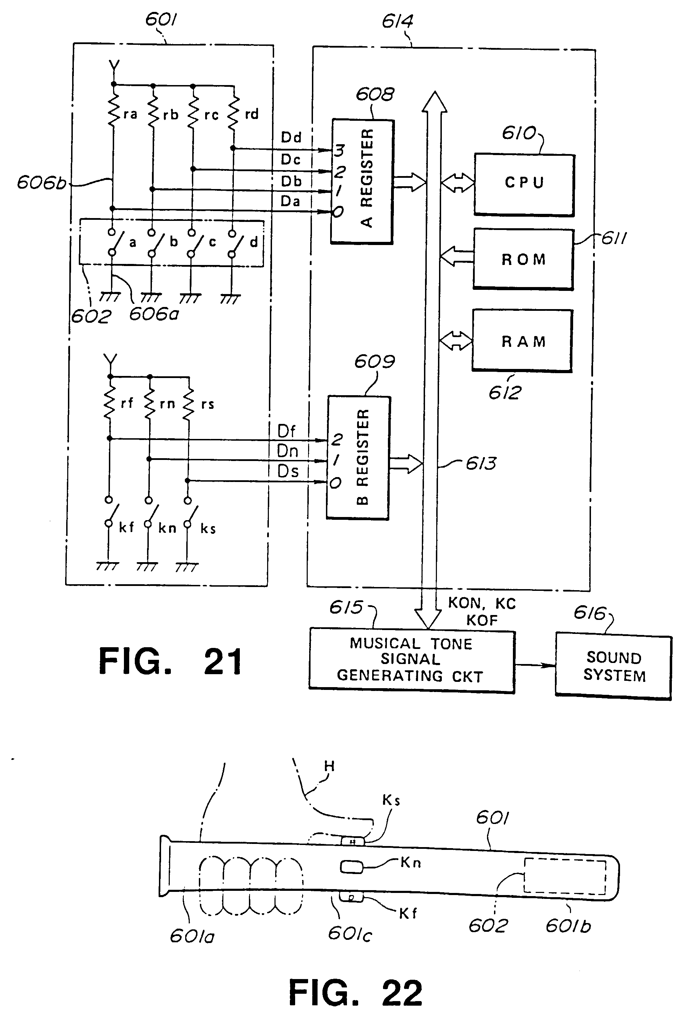

Fig. 21 is a block diagram showing a third embodiment of the musical tone control apparatus according to the present invention, and Fig. 22 shows an appearance of a stick 601 used in this third embodiment.

First, description will be given with respect to the constitution of the stick 601. As shown in Fig. 22, a base portion of the stick 601 has a shape which can be held by the player's hand H, and an angle detector 602 is provided in the inside of a tip edge portion 601b of the stick 601. In addition, a # (sharp) key-on switch Ks, a key-on switch Kn and a b (flat) key-on switch Kf are mounted on a center portion 601c of the stick 601. These switches Ks, Kn and Kf can be depressed by a thumb or an index finger of the player's hand H which holds the base portion 601a.

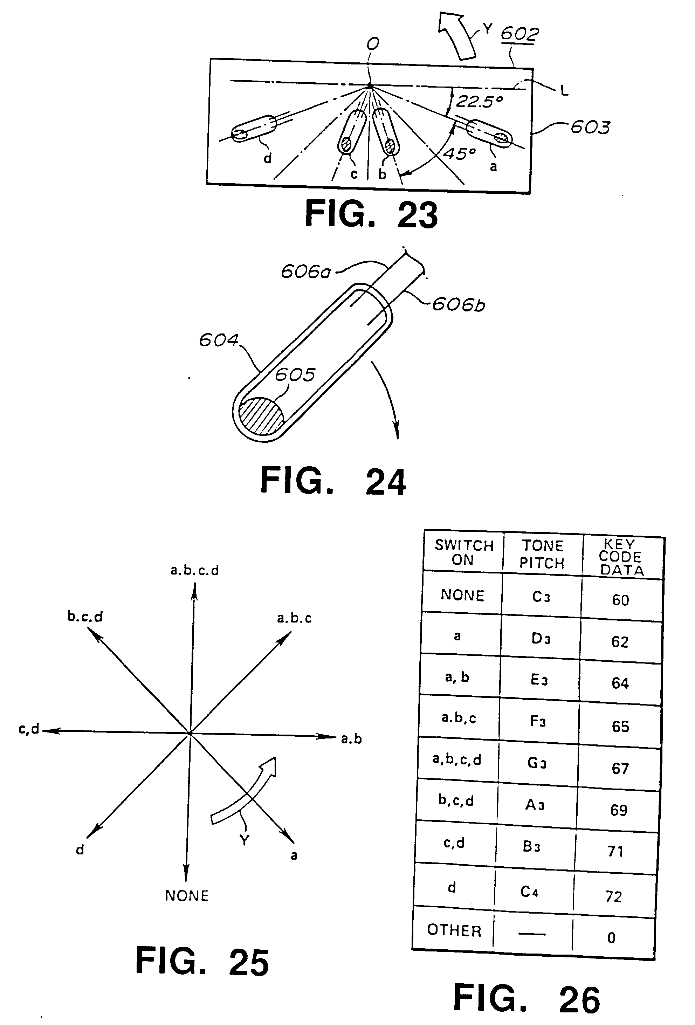

As shown in Fig. 23, the angle detector 602 is constituted by a supporting plate 603 and four detecting switches a to d attached to the supporting plate 603. These detecting switches a to d are arranged by respective angles of 22.5 degrees, 67.5 degrees, 112.5 degrees and 157.5 degrees with respect to a reference line L. As shown in Fig. 24, each of the detecting switches a to d is constructed by a glass tube 604, mercury fluid 605 and a pair of electrodes 606a and 606b. The glass tube 604 is closely packed and enclosed by a certain volume of the mercury fluid 605, and the electrodes 606a and 606b are inserted through an edge wall of the glass tube 604. In a state as shown in Fig. 24, the electrode 606a is not connected to the electrode 606b, hence, this detecting switch is turned off. When the edge portion of the glass tube 604 inserted by the electrodes 606a and 606b is inclined downward in a direction as shown by an arrow in Fig. 24, the electrode 606a will be connected to the electrode 606b via the mercury fluid 605 so that this detecting switch will be turned on. In the case where the angle detector 602 shown in Fig. 23 is revolved around the reference point O, the on/off states of the detecting switches a to d becomes as shown by Fig. 25. More specifically, all of the detecting switches a to d are turned off in the state shown in Fig. 23. When the angle detector 602 revolves around the reference point O in a direction Y (i.e., in a counter-clockwise direction) by 45 degrees, only the detecting switch a is turned on. By further revolving the angle detector 602 by 45 degrees, the detecting switches a and b are turned on. Hence, as the revolving angle of the angle detector 602 advances by every 45 degrees, the detecting switches which are turned on are identified as the detecting switches a, b and c; the detecting switches a, b, c and d; the detecting switches b, c and d; the detecting switches c and d; the detecting switch d.

Next, description will be given with respect to an electric constitution of the apparatus shown in Fig. 21. In Fig. 21, the electrode 606a of each of the detecting switches a to d mounted in the stick 601 is grounded, and the electrodes 606b of the detecting switches a to d are respectively connected to one terminals of pull-up resistors ra to rd and also connected to 0-bit to 3-bit of an A register 608. Thus, these 0-bit to 3-bit of the A register 608 store respective detection data Da to Dd corresponding to on/off states of the detecting switches a to d. Meanwhile, one terminals of the # key-on switch Ks, the key-on switch Kn and the b key-on switch Kf mounted on the stick 601 are grounded, and other terminals thereof are connected to respective one terminals of pull-up resistors rs, rn and rf and also connected to a B register 609 of three bits. Hence, 0-bit to 2-bit of the B register 609 store respective operation data Ds, Dn and Df corresponding to on/off states of the key-on switches Ks, Kn and Kf. In this case, each value of the above detection data Da to Dd and the operation data Ds, Dn and Df becomes identical to "0" when each of the detecting switches a to d and the key-on switches Ks, Kn and Kf is turned on. On the other hand, each value of such data becomes identical to "1" when each of such switches is turned off.

Meanwhile, a musical tone control circuit 614 is constituted by the registers 608 and 609, a CPU 610, a ROM 611 for storing predetermined programs used in the CPU 610, a RAM 612 used as a work area and a bus line 613. By executing processes which will be described later, the CPU 610 generates key code data KC, a key-on signal KON and a key-off signal KOF based on the detecting data Da to Dd stored in the A register 608 and based on the operation data Ds, Dn and Df stored in the B register 609. Such key code data KC, key-on signal KON and key-off signal KOF are supplied to a musical tone signal generating circuit 615 via the bus line 613.

Based on the above key code data KC, the key-on signal KON and the key-off signal KOF, the musical tone signal generating circuit 615 generates a musical tone signal. More specifically, the musical tone signal generating circuit 615 generates the musical tone signal having the tone pitch corresponding to the value of the key code data KC and the predetermined tone color. This musical tone signal is supplied to a sound system 616 wherein a musical tone corresponding to the musical tone signal is generated.

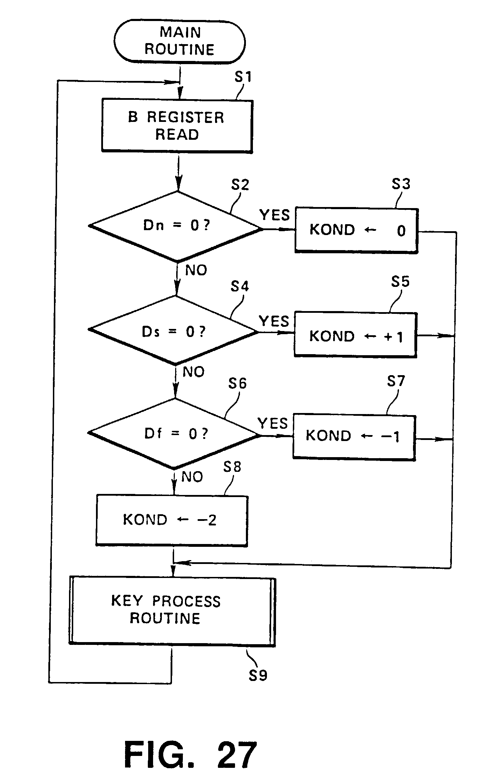

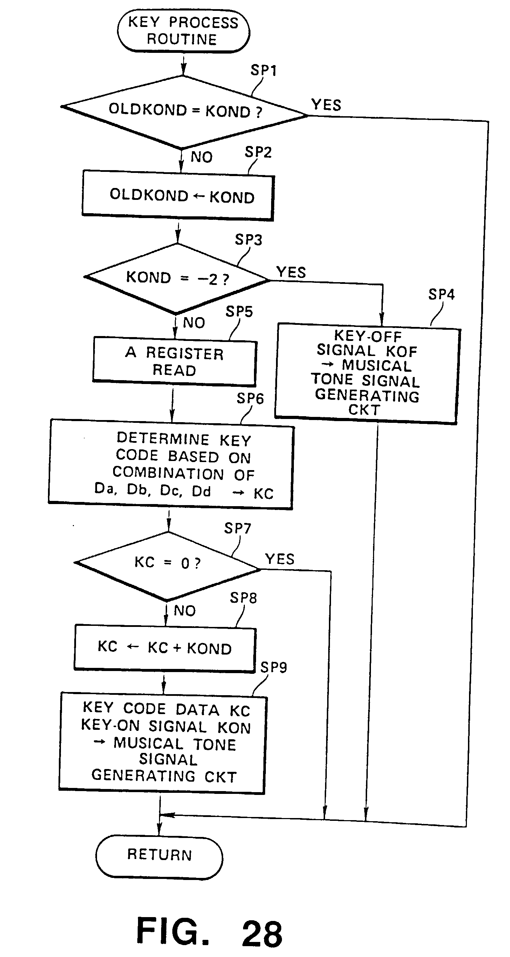

Next, description will be given with respect to operations of the above-mentioned third embodiment by use of flowcharts shown in Figs. 27 and 28. Fig. 27 shows a flowchart of a main routine which will be repeatedly performed by the CPU 610 in a normal mode.

In Fig. 27, the CPU 610 reads the operation data Ds, Dn and Df stored in the B register 609 in a step S1. Next, the CPU 610 judges whether the key-on switch Kn is depressed or not based on the operation data Dn in a step S2. In this case, the CPU 610 judges that the key-on switch Kn is depressed when the value of the operation data Dn is equal to "0", and the process advances to a next step S3. On the other hand, the CPU 610 judges that the key-on switch Kn is not depressed when the value of the operation data Dn is equal to "1", and the process advances to a next step S4. In this step S4, the CPU 610 judges whether the # key-on switch Ks is depressed or not based on the operation data Ds. In this case, the CPU 610 judges that the # key-on switch Ks is depressed when the value of the operation data Ds is equal to "0", and the process advances to a next step S5. On the other hand, the CPU 610 judges that the # key-on switch is not depressed when the value of the operation data Ds is equal to "1", and the process advances to a next step S6. In this step S6, the CPU 610 judges whether the b key-on switch Kf is depressed or not based on the operation data Df. In this case, the CPU 610 judges that the b key-on switch Kf is depressed when the value of the operation data Df is equal to "0", and the process advances to a next step S7. On the other hand, the CPU 610 judges that the b key-on switch Kf is not depressed when the value of the operation data Df is equal to "1", and the process advances to a next step S8. In this step S8, a value of key-on data KOND stored in a predetermined area of the RAM 612 is set equal to "-2", and then the process advances to a next step S9. In addition, the value of the key-on data KOND is set equal to "0", "+1" or "-1" in the step S3, S5 or S7 independently, and the process advances to the step S9. This step S9 represents a key processing routine which will be described later. After the process in the step S9 is executed, the process returns to the step S1 again.

Next, description will be given with respect to the key processing routine in conjunction with Fig. 28.

In Fig. 28, the CPU 610 judges whether old key-on data OLDKOND pre-stored in the predetermined area of the RAM 612 coincide with new key-on data KOND or not in a step SP1. When the old key-on data OLDKOND coincide with the new key-on data KOND, the process returns to the main routine. On the other hand, when the old key-on data OLDKOND do not coincide with the key-on data KOND, the process advances to a next step SP2. In this step SP2, the old key-on data OLDKOND pre-stored in the RAM 612 are re-written by the new key-on data KOND. In a step SP3, the CPU 610 judges whether the value of the key-on data KOND equals to "-2" or not. When the value of the key-on data KOND equals to "-2", the process advances to a step SP4. When the value of the key-on data KOND does not equal to "-2", the process advances to a step SP5. In this step SP5, the CPU 610 reads the detecting data Da to Dd stored in the A register 608. In a next step SP6, the CPU 610 determines the value of the key code data KC based on a combination of the detecting data Da, Db, Dc and Dd. In this case, Fig. 26 represents relations between the value of the key code data KC and the combination of the detecting data Da, Db, Dc and Dd. For example, when the position of the angle detector 602 is set as shown in Fig. 23, all of the detecting switches a to d are turned off so that all values of the detecting data Da to Dd become identical to "1". In this case, the value of the key code data KC is set equal to "60" which corresponds to a predetermined tone pitch $C_3$.

Next, the CPU 610 judges whether the value of the key code data KC is equal to "0" or not in a step SP7. When the value of the key code data KC equals to "0", the process returns to the main routine. When the value of the key code data KC does not equal to "0", the process advances to a next step SP8. In this step SP8, the key code data KC are added with the key-on data KOND so as to obtain an addition result, and such addition result is set identical to the new key code data KC. In the case where the # key-on switch Ks is depressed, the value of the key-on data KOND is set identical to "+1" in the step S5 within the main routine described before. Thus, the value of the old key code data $KC_{OLD}$ is added with the value "1" in the step SP8 so that the old key code data $KC_{OLD}$ are converted into new key code data KC having a tone pitch which is higher than that of the old key code data $KC_{OLD}$ by a chromatic semi-tone. In other words, the old key code data $KC_{OLD}$ (having the value "60") corresponding to the tone pitch $C_3$ are converted into the new key code data KC (having the value "61") corresponding to a tone pitch $C\#_3$, for example.

On the contrary, when the b key-on switch Kf is depressed, the value of the key-on data KOND is set equal to "-1" in the step S7 within the main routine. Thus, the value "1" is subtracted from the value of the old key code data $KC_{OLD}$ in the step S8 so that the old key code data $KC_{OLD}$ are converted into the new key code data KC having a tone pitch which is lower than that of the old key code data $KC_{OLD}$ by the chromatic semi-tone. In other words, the old key code data $KC_{OLD}$ (having the value "60") corresponding to the tone pitch $C_3$ are converted into the new key code data KC (having the value "59") corresponding to a tone pitch $Cb_3$ ($B_2$).

Next, the CPU 610 outputs the new key code data KC the value of which is calculated in the step SP8 in a step SP9, and then the CPU 610 outputs the key-on signal KON. Such data KC and the signal KON are sequentially supplied to the musical tone signal generating circuit 615 via the bus line 613. Thus, the musical tone signal generating circuit 615 starts to generate the musical tone signal, and such musical tone signal is supplied to the sound system 616 wherein the musical tone having the tone pitch corresponding to the key code data KC is generated.

Meanwhile, in the case where all of the switches Kn, Ks and Kf are not depressed, the value of the key-on data KOND is set equal to "-2" in the step S8 within the main routine described before. In this case, the CPU 610 judges that the value of the key-on data KOND equals to "-2" in the step SP3 within the key processing routine, and the process advances to the next step SP4. In this step SP4, the CPU 610 generates the key-off signal KOF, and this key-off signal KOF is supplied to the musical tone signal generating circuit 615 via the bus line 613. Thus, the musical tone signal generating circuit 615 stops generating the musical tone signal, whereby the sound system 616 stops generating the musical tone. Thereafter, the process of the CPU 610 returns to the main routine again.

As described heretofore, the third embodiment of the present invention performs the operation for generating the musical tone. According to the third embodiment, in the case where the player's hand H holding the stick 601 as shown in Fig. 21 is swung up and down and the key-on switch Kn is depressed by the thumb of the player's hand H, it is possible to generate the musical tone having the tone pitch corresponding to the moving direction of the player's hand H, i.e., corresponding to the movement of the player's arm and body. Similarly, the tone pitch can be raised by the chromatic semi-tone by depressing the # key-on switch Ks, and the tone pitch can be lowered by the chromatic semi-tone by depressing the b key-on switch Kf.

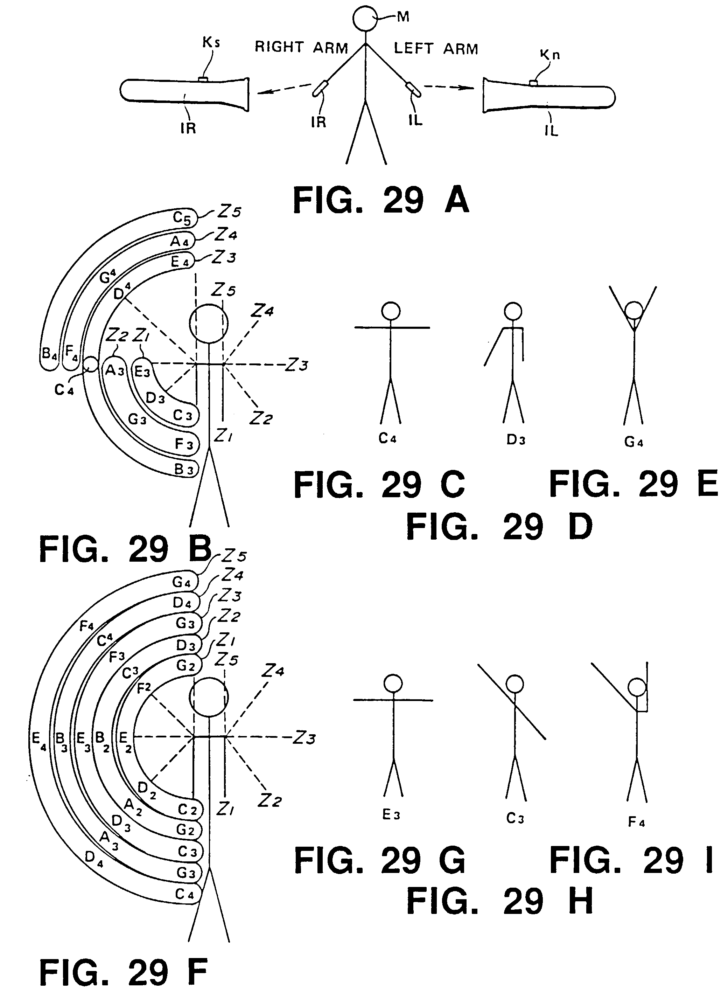

Next, description will be given with respect to the modified embodiment of the third embodiment in conjunction with Figs. 29A to 29I. This modified embodiment is constituted such that the tone pitch and the tone generating timing can be controlled by using two sticks 601R and 601L each having the same constitution similar to the constitution of the stick 601. This modified embodiment further provides an A register 608a of four bits other than the A register 608 within the musical tone control circuit 614. In this case, the detecting data Da to Dd outputted from the stick 601R are stored in the A register 608, and other detecting data Da to Dd outputted from the stick 601L are stored in the A register 608a. In addition, respective operation data Ds outputted from the sticks 601R and 601L are combined into one operation data Ds under an logical AND operation. Similarly, respective operation data Dn and respective operation data Df outputted from the sticks 601R and 601L are combined into one operation data Dn and one operation data Df under the logical AND operation. Such combined operation data Ds, Dn and Df are stored in the B register 609. Hence, the performance is done by the player M who holds the sticks 601R and 601L in his right and left hands respectively as shown in Fig. 29A.

In the above-mentioned modified embodiment, each of the sticks 601R and 601 provides the key-on switches Ks, Kn and Kf. However, it is possible to constitute such modified embodiment such that one of the sticks 601R and 601L provides the key-on switches Ks, Kn and Kf. In addition, it is also possible to constitute the modified embodiment such that the stick 601R provides the switches Ks and Kf and the stick 601L provides the switch Kn, for example.

In the case where the stick 601L provides the switch Kn and the stick 601R provides the other switches, the tone pitch of the musical tone to be generated is determined by the combination of the respective detecting data Da to Dd outputted from the sticks 601R and 601L. In this case, the performance will be done as shown in Figs. 29B to 29E, for example. As the player's right arm is rising from a bottom direction after the player's left arm is turned to a position $Z_1$ (shown in Fig. 29B) and the key-on switch Kn is depressed, the tone pitch will be varied in a sequence of $C_3$, $D_3$ and $E_3$, for example. Similarly, as the player's right arm is rising from the bottom direction after the player raises his left arm to a position $Z_2$ and depresses the key-on switch Kn, the tone pitch will be varied in a sequence of $F_3$, $G_3$ and $A_3$, for example. In addition, when positions of the player's right and left arms are set as show in Fig. 29C, a tone pitch $C_4$ can be obtained. Similarly, when the positions of the player's right and left arms are set as shown in Fig. 29D or 29E, a tone pitch $D_3$ or $G_4$ can be obtained.

Meanwhile, Figs. 29F to 29I show other examples of performance. As the player raises his right arm from the bottom direction after the player's left arm is turned to the position $Z_1$ (shown in Fig. 29F) and the key-on switch Kn is depressed, the tone pitch will be varied in a sequence of $C_2$, $D_2$, $E_2$, $F_2$ and $G_2$, for example. Similarly, as the player's right arm is rising from the bottom direction after the player raises his left arm to a position $Z_2$ and depresses the key-on switch Kn, the tone pitch will be varied is a sequence of $G_2$, $A_2$, $B_2$, $C_3$ and $D_3$, for example. In addition, when the positions of the player's right and left arms are set as shown in Fig. 29G, a tone pitch $E_3$ can be obtained. Similarly, when the positions of the player's right and left arms are set as shown in Fig. 29H or 29I, a tone pitch $C_3$ or $F_4$ can be obtained.

According to the modified embodiment described heretofore, it is possible to perform various kinds of the musical tone controls by using both of the sticks 601R and 601L held by both hands of the player M.

Incidentally, it is possible to further modify the third embodiment such that the stick 601 provides an octave switch and this octave switch is turned on or off so as to raise or lower the tone pitch by one octave. In addition, the angle detector 602 is provided in the inside of the cylindrical stick.601 in the embodiments described heretofore. However, the shape of the stick is not limited to the cylindrical stick 601, and it is possible to construct the stick 601 in an arbitrary shape. Further, the tone pitch of the musical tone to be generated is varied in response to the force given to the angle detector 602 in the embodiments described heretofore. However, it is possible to vary the tone color and the tone volume in response to the force given to the angle detector 602, or it is possible to control the musical tone to be generated or not based on such force. Furthermore, it is possible to mount the angle detector 602 to the player's feet or body to thereby control the musical tone in response to the movement of the player's feet and the like.

## (D) FOURTH EMBODIMENT

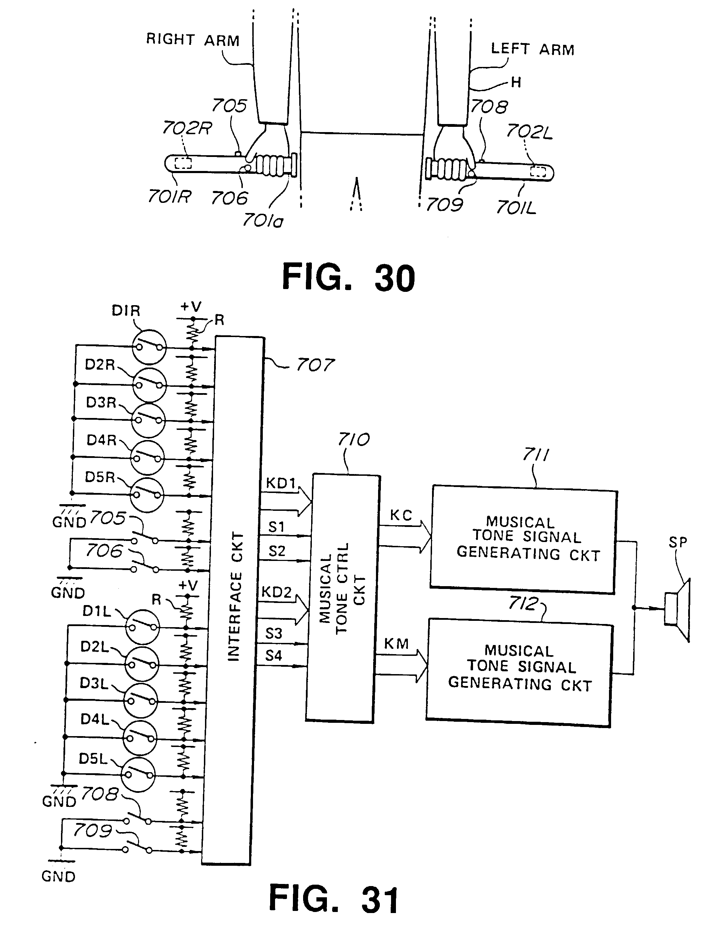

Fig. 30 shows a rhythm stick 701R for the player's right hand and a rhythm stick 701L for the player's left hand according to a fourth embodiment of the musical tone control apparatus according to the present invention. In Fig. 30, 705 and 706 designate pushbutton switches of the stick 701R. The pushbutton switch 705 is mounted at a position where the thumb of the player's right hand can reach and the pushbutton switch 706 is mounted at a position where the index finger of the player's right hand can reach when the player holds a holding portion 701a of the stick 701R by his right hand. These switches 705 and 706 are respectively connected to an interface circuit 707 shown in Fig. 31. In addition, an angle detector 702R is mounted within a tip edge portion of the stick 701R. This angle detector 702R provides five mercury switches D1R to D5R each of which is connected to the interface circuit 707. Furthermore, respective one terminals of the switches 705, 706 and the mercury switches D1R to D5R are supplied with a constant voltage V via respective resistors (R), and respective other terminals thereof are grounded to (GND).

Similar to the stick 701R, the stick 701L provides pushbutton switches 708 and 709 (corresponding to the pushbutton switches 705 and 706) and also provides an angle detector 702L (corresponding to the angle detector 702R). In addition, the switches 708, 709, and mercury switches D1L to D5L mounted in the angle detector 702L (corresponding to the mercury switches D1R to D5R mounted in the angle detector 702R) are connected to the interface circuit 707 respectively. This interface circuit 707 detects angles of the player's right and left arms with respect to the plumb line based on output signals of the mercury switches D1R to D5R and the mercury switches D1L to D5L as well, and this interface circuit 707 generates angle data KD1 and KD2 based on the detecting result of the angles of the player's arms. Such angle data KD1 and KD2 are sequentially supplied to a musical tone control circuit 710. In addition, the interface circuit 707 detects on/off states of the switches 705, 706, 708 and 709 so as to generate respective signals S1, S2, S3 and S4. Each of these signals S1 to S4 has a "H" (High) level when each of the switches 705, 706, 708 and 709 is depressed. On the other hand, each of these signals S1 to S4 has a "L" (Low) level when each of the switches 705, 706, 708 and 709 is released. These signals S1 to S4 are supplied to the musical tone control circuit 710. First, this musical tone control circuit 710 checks each value of the signals S1 and S2, and the musical tone control circuit 710 generates tone pitch data KC based on the angle data KD1 and KD2 when both of the signals S1 and S2 are identical to the "0" signal (i.e., when both of the switches 705 and 706 are turned off).

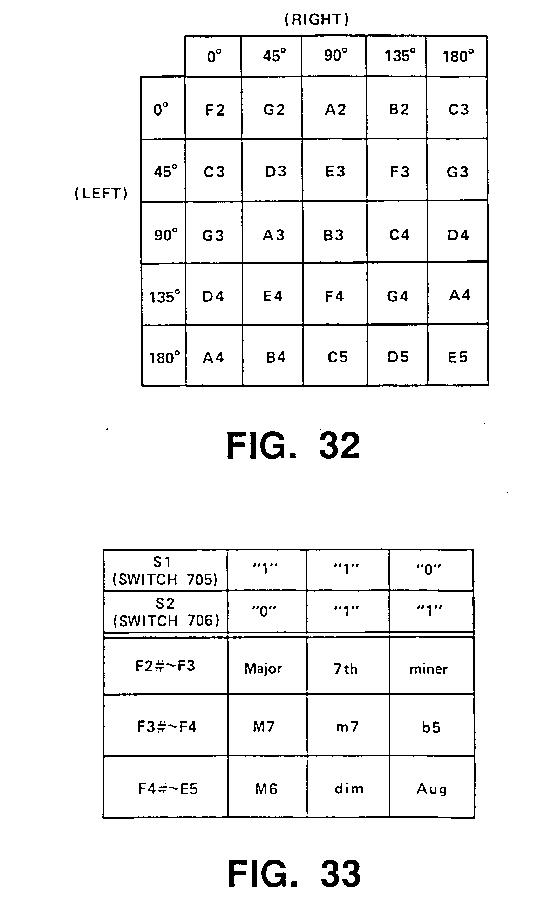

In Fig. 32, the upper row represents the swing angle of 0 degree to 180 degrees of the player's right arm, and the left column represents the swing angle of 0 degree to 180 degrees of the player's left arm. As shown in Fig. 32, the musical tone control circuit 710 generates the tone pitch data KC, the value of which corresponds to one of the tone pitches F2, G2, A2, ..., C5, D5, E5. In such process for determining the tone pitch,. the value of the tone pitch data KC is raised by the chromatic semi-tone (#; sharp) when the signal S3 is identical to the "1" signal (i.e., when the switch 708 is turned on), and the value of the tone pitch data KC is lowered by the chromatic semi-tone (b; flat) when the signal S4 is identical to the "1" signal (i.e., when the switch 709 is turned on). Such tone pitch data KC are sequentially supplied to a musical tone signal generating circuit 711.

In addition, when both of or one of the signals S1 and S2 is identical to the "1" signal (i.e., when both of or one of the switches 705 and 706 is turned on), the musical tone control circuit 710 generates chord data KM in accordance with the on/off states of the switches 705, 706, and the values of the angle data KD1 and KD2. In Fig. 33, F2# to F3, F3# to F4 and F4# to E5 represent respective ranges of the tone pitches which are determined based on the swing angles of the player's right and left arms as shown in Fig. 32. In response to such tone pitch range and the on/off states of the switches 705 and 706 (shown in the upper rows in Fig. 32), the musical tone control circuit 710 generates the chord data KM corresponding to one of chord kinds of Major, 7th, miner, M7 (7th), m7 (7th), b5 (5th), M6 (6th), dim (diminution), Aug (Augmentation). In the case where the swing angles of the player's both arms are identical to 90 degrees, the tone pitch is determined to B3 as shown in Fig. 32. In this state, when the switch 705 is turned on and the switch 706 is turned off, the chord of M7 is selected in accordance with the tone pitch B3. In addition, when both of the switches 705 and 706 are turned on, the chord of B3-m7 is selected. Furthermore, when the switch 705 is turned off and the switch 706 is turned on, the chord of B3-b5 is selected. In each case, the musical tone control circuit 710 generates the chord data KM corresponding to the chord of M7, B3-m7 or B3-b5, and such chord data KM are sequentially supplied to a musical tone signal generating circuit 712 wherein a chord accompaniment signal corresponding to the chord data KM is generated. On the other hand, the musical tone signal generating circuit 711 generates a melody tone signal having the tone pitch corresponding to the tone pitch data KC which are outputted from the musical tone control circuit 710. Hence, a speaker SP is driven based on the chord accompaniment signal and the melody tone signal.

In the above-mentioned constitution, when the player swings up his arms holding the sticks 701R and 701L and releases the switches 705 and 706, the speaker SP generates a melody tone having the tone pitch corresponding to the swing angles of the player's arms and the on/off states of the switches 708 and 709. In this state, when the player depresses one of or both of the switches 705 and 706, the speaker SP generates the accompaniment tone corresponding to the swing angles of the player's arms and the on/off states of the switches 705, 706, 708 and 709.

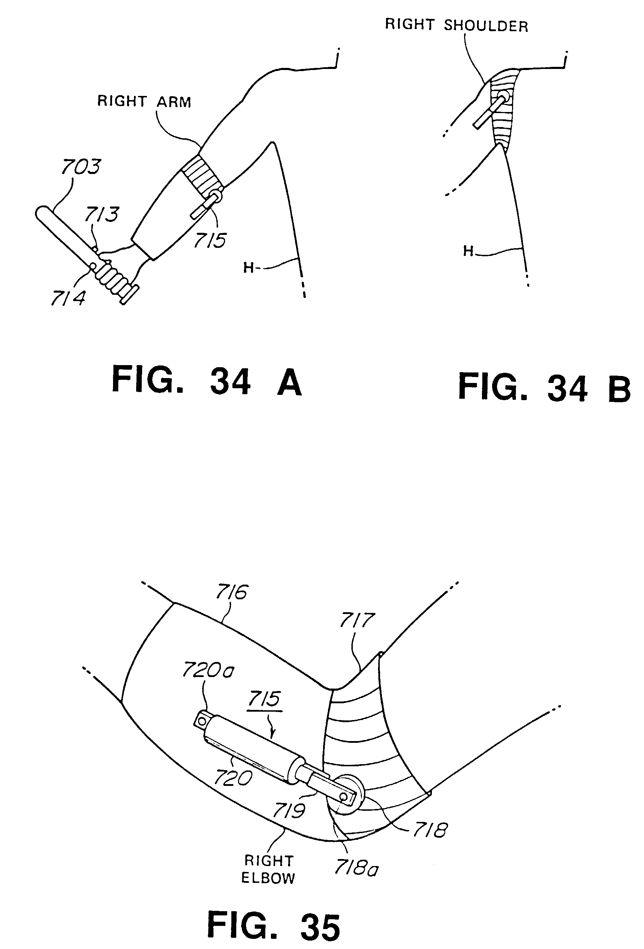

In the present fourth embodiment, the angle detectors 702R and 702L mounted within the sticks 701R and 701L are used for detecting the swing angles of the player's arms. Instead, it is possible to employ an angle detector 715 as shown in Fig. 34A. In Fig. 34A, the player holds a stick 703 mounted with switches 713 and 714 (corresponding to the switches 705 and 706), and the angle detector 715 is mounted at the player's right elbow in order to detect the bending angle of the player's right elbow. In this case, the player's left arm has the same constitution as shown in Fig. 34A, hence, the drawing thereof and the description thereof will be omitted. Fig. 35 shows a detailed constitution of the player's right elbow shown in Fig. 34A. In Figs. 34A and 35, 716 designates a mounting wear covering the upper half of the player's body, and 717 designates a supporter which is made of flexible fiber materials such as the rubber material and which covers the joint portion of the player's right elbow. This supporter is mounted with a resistor 718 of the angle detector 715 at a portion covering the joint of the player's right elbow. This angle detector 715 is constituted such that a lever 719 is fixed at a shaft 718a of the resistor 718 and a tip edge portion of the lever 719 can be freely put out and in a cylinder 720. In addition, a spring is provided in the inside of the cylinder 720 in order to pull the lever 719. Furthermore, a fixing portion 720a is formed at an edge portion of the cylinder 720, and this fixing portion 720a is mounted at a certain portion of the mounting wear 716 which covers the player's right arm.

In the above-mentioned constitution, the lever 719 and the cylinder 720 vibrates in response to a movement for bending or stretching the player's right elbow so that the shaft 718a will be revolved. Hence, the resistor 718 outputs a detection signal the value of which corresponding to the revolving angle of the shaft 718a (i.e., the bending angle of the player's right elbow). Such detection signal is supplied to an A/D converter (not shown) wherein the level of the detection signal is converted into angle data KD1, and such angle data KD1 are supplied to the musical tone control circuit 710 shown in Fig. 31. Similarly, the angle data KD2 corresponding to angle detector for the player's left elbow (not shown) are supplied to the musical tone control circuit 710. Thus, the melody tone or the accompaniment tone will be generated in response to the bending angles of the player's elbows and the on/off states of the switches mounted on the sticks. In this case, the melody tone can not have the tone pitches described in the row and the column of 180 degrees in Fig. 32 because the player's elbow can not bend by 180 degrees. For this reason, the accompaniment tone can not have the chords of M6, dim and Aug in the row of the tone pitch range of F4# to E5 shown in Fig. 33. In the above-mentioned embodiment, the angle detectors are mounted at the player's elbows, however, it is possible to mount such angle detectors at the player's shoulders as shown in Fig. 34B.

In these embodiments, the angle detectors 702R and 702L or the angle detector 715 is used as angle detecting means, however, the angle detecting means is not limited to such angle detectors. Furthermore, in Fig. 34A, the switches mounted on the sticks held by the player's arms are used instead of the switches 705, 706, 708 and 709 shown in Fig. 31, however, these switches are not necessarily mounted to the sticks.

**Claims**

1. A musical tone control apparatus comprising:

   (a) musical tone control means (522 in Fig. 10, 614 in Fig. 21, 710 in Fig. 31) for generating musical tone control data based on a detected result;
   (b) musical tone generating means (526 in Fig. 10, 615 in Fig. 21, 224 in Fig. 6) coupled to the control means for generating a musical tone signal based on the musical tone control data, **characterized** in that the musical tone control apparatus further comprises:
   (c) detecting means (508a, b in Fig. 10, 602 in Fig. 21, 702R, 702L in Fig. 20, 202a, 202b, 203a, 203b in Fig. 6) mountable on or holdable by a predetermined portion of a player and coupled to the control means for detecting an angle of the predetermined portion of the player and for outputting the detected angle as the detected result to the musical tone control means.

2. A musical tone control apparatus according to claim 1 wherein the detecting means (508a, 508b in Fig. 9 or 531 in Fig. 16) detects a bending angle or a revolving angle of a predetermined portion of a player.

3. A musical tone control apparatus according to claim 2 wherein said detecting means is constituted by a potentiometer (508a, 508b) which is mounted at a joint portion of said player, said potentiometer detecting said bending angle or said revolving angle of said joint portion.

4. A musical tone control apparatus according to claim 2 wherein said detecting means comprises

   (a) an ultrasonic transmitter (551a, 551b) and an ultrasonic receiver (552a, 552b) each of which is mounted at a predetermined portion apart from a joint portion of said player; and
   (b) an ultrasonic detecting circuit (501b) for detecting said bending angle or said revolving angle of said joint portion based on a time for transmitting a ultrasonic wave from said ultrasonic transmitter to said ultrasonic receiver.

5. A musical tone control apparatus according to claim 2 wherein said detecting means (517a to 517d) is constituted by a pressure sensitive element which is mounted at a finger tip portion (516a to 516d) of a flexible glove (516), said pressure sensitive element detecting a bending angle of finger tip based on a pressure given to said presssure sensitive element.

6. A musical tone control apparatus according to claim 2 wherein said musical tone control data represent a tone pitch, a tone volume, a tone color or a tempo of a musical tone to be generated.

7. A musical tone control apparatus according to claim 2 wherein said detecting means (508a, 508b) judges whether said joint of said player is bent or not.

8. A musical tone control apparatus according to claim 2 wherein said detecting means judges whether said joint of said player is revolved or not.

9. A musical tone control apparatus according to claim 2 wherein said detecting means detects a bending angle based on predetermined bending degrees each representative of each of predetermined bending angles.

10. A musical tone control apparatus according to claim 1 wherein the detecting means includes angle detecting means (602) which detects an angle formed between the direction of an object attached to said predetermined portion of the player and a reference plane and generates an angle signal representative of the detected angle, and the musical tone control means (614) generates musical tone control data which controls an external musical tone generation apparatus based on the angle signal.

11. A musical tone control apparatus according to claim 10 wherein said reference plane is identified as a horizontal plane and said angle detecting means (602) detects said angle by use of a gravity responsive medium.

12. A musical tone control apparatus according to claim 10 wherein said angle detecting means (602) is constituted by a mercury switch (a to d).

13. A musical tone control apparatus according to claim 10 wherein said angle detecting means (602) has shape which can be held by a player's hand.

14. A musical tone control apparatus according to claim 10 wherein said angle detecting means (602) has a stick shape.

15. A musical tone control apparatus according to claim 10 wherein said musical tone control data represent a tone pitch, a tone volume or a tone color of a musical tone to be generated.

16. A musical tone control apparatus according to claim 1 wherein the detecting means (701R, 701L) detects a position of a predetermined portion of player with respect to a reference point as the angle.

17. A musical tone control apparatus according to claim 16 wherein said detecting means (701R, 701L) detects a position of a player's arm.

18. A musical tone control apparatus according to claim 16 wherein said detecting means (701R, 701L) detects respective positions of a right arm and a left arm of the player, said control means generating said musical tone control data based on a combination of detecting results of said right and left arms of the player.

19. A musical tone control apparatus according to claim 16 wherein said detecting means is constituted by an angle sensor (702R, 702L).

20. A musical tone control apparatus according to claim 16 wherein said detecting means has portable shape.

21. A musical tone control apparatus according to claim 19 wherein said angle sensor (702R, 702L) is mounted at a predetermined portion of said player's body.

22. A musical tone control apparatus according to claim 19 wherein said angle sensor has a shape which can be held by a player's hand.

23. A musical tone control apparatus according to claim 16 wherein said musical tone control data represent a tone pitch, a tone volume or a tone color of a musical tone to be generated.

24. A musical tone control apparatus according to claim 19 wherein said musical tone control data represent a musical information of an accompaniment.

25. A musical tone control apparatus according to claim 19 wherein said musical tone control data represent a tone pitch or a chord of the musical tone.

26. A musical tone control apparatus according to claim 1 wherein the detecting means (202a, 202b, 203a, 203b) are configured to be mounted on a player in vicinity of a joint of the player and detects an angle of the joint portion, the musical tone control means (201) detects a bending angular velocity of the joint portion based on a variation of the angle detected by the detecting means in lapse of time, and the musical tone generating means (224) generates a musical tone signal in accordance with a signal derived from the detected angle.

**Patentansprüche**

1. Vorrichtung zur Musiktonsteuerung folgendes aufweisend:

(a) Musiktonsteuermittel (522 in Fig. 10, 614 in Fig. 21, 710 in Fig. 31) zur Erzeugung von Musiktonsteuerdaten auf der Grundlage eines Ermittlungsergebnisses;
(b) mit den Steuermitteln verbundene Musiktonerzeugungsmittel (526 in Fig. 10, 615 in Fig 21, 224 in Fig. 6) zur Erzeugung eines Musiktonsignals auf der Grundlage der Musiktonsteuerdaten, **dadurch gekennzeichnet,** daß die Vorrichtung zur Musiktonsteuerung ferner folgendes aufweist:
(c) Nachweismittel (508a, b in Fig. 10, 602 in Fig 21, 702R, 702L in Fig. 20, 202a, 202b, 203a, 203b in Fig. 6), die an einem vorgegebenen Körperteil eines Spielers befestigbar sind oder von diesem gehalten werden können und mit den Steuermitteln verbunden sind, um einen Winkel des vorgegebenen Körperteils des Spielers zu ermitteln und den ermittelten Winkel als das Ermittlungsergebnis an die Musiktonsteuermittel auszugeben.

**2.** Vorrichtung zur Musiktonsteuerung nach Anspruch 1, bei der die Nachweismittel (508a, 508b in Fig. 9 oder 531 in Fig. 16) einen Beugungswinkel oder einen Drehungswinkel eines vorgegebenen Körperteils eines Spielers ermitteln.

**3.** Vorrichtung zur Musiktonsteuerung nach Anspruch 2, bei der die Nachweismittel aus einem Potentiometer (508a, 508b) bestehen, das an einem Gelenkteil des Spielers befestigt ist, wobei das Potentiometer den Beugungswinkel oder den Drehungswinkel dieses Gelenkteils nachweist.

**4.** Vorrichtung zur Musiktonsteuerung nach Anspruch 2, bei dem die Nachweismittel folgendes aufweisen:

(a) einen Ultraschallsender (551a, 551b) und einen Ultraschallempfänger (552a, 552b), die an einem vorgegebenen Körperteil abseits von dem Gelenkteil des Spielers befestigt sind; und
(b) eine Ultraschallnachweisschaltung (501b) zur Ermittlung des Beugungswinkels oder des Drehungswinkels des Gelenkteils auf der Grundlage einer Laufzeit einer Ultraschallwelle von dem Ultraschallsender zu dem Ultraschallempfänger.

**5.** Vorrichtung zur Musiktonsteuerung nach Anspruch 2, bei der die Nachweismittel (517a bis 517d) aus einem druckempfindlichen Element bestehen, das an einem Fingerspitzenteil (516a bis 516d) eines elastischen Handschuhes (516) befestigt ist, wobei das druckempfindliche Element einen Beugungswinkel der Fingerspitze auf der Grundlage eines auf das druckempfindliche Element ausgeübten Drukkes ermittelt.

**6.** Vorrichtung zur Musiktonsteuerung nach Anspruch 2, bei der die Musiktonsteuerdaten eine Tonhöhe, ein Lautstärke, eine Klangfarbe oder ein Tempo eines zu erzeugenden Musiktones repräsentieren.

**7.** Vorrichtung zur Musiktonsteuerung nach Anspruch 2, bei der die Nachweismittel (508a, 508b) beurteilen, ob das Gelenk des Spieler gebeugt ist oder nicht.

**8.** Vorrichtung zur Musiktonsteuerung nach Anspruch 2, bei der die Nachweismittel beurteilen, ob das Gelenk des Spielers gedreht ist oder nicht.

**9.** Vorrichtung zur Musiktonsteuerung nach Anspruch 2, bei der die Nachweismittel einen Beugungswinkel auf der Grundlage eines vorgegebenen Beugungsgrades ermitteln, der für einen vorgegebenen Beugungswinkel repräsentativ ist.

**10.** Vorrichtung zur Musiktonsteuerung nach Anspruch 1, bei der die Nachweismittel Winkelnachweismittel (602) enthalten, die einen Winkel ermitteln, der zwischen der Richtung eines an dem vorgegebenen Körperteil des Spielers angebrachten Objektes und einer Referenzebene gebildet wird, und ein für den ermittelten Winkel repräsentatives Winkelsignal erzeugen, und die Musiktonsteuermittel (614) Musiktonsteuerdaten erzeugen, die eine externe Vorrichtung zur Musiktonerzeugung auf der Grundlage des Winkelsignals ansteuern.

**11.** Vorrichtung zur Musiktonsteuerung nach Anspruch 10, bei der die Referenzebene als eine horizontale Ebene identifiziert wird und die Winkelnachweismittel (602) diesen Winkel mit Hilfe eines auf die Schwerkraft ansprechenden Mittels nachweisen.

**12.** Vorrichtung zur Musiktonsteuerung nach Anspruch 10, bei der die Winkelnachweismittel (602) aus einem Quecksilberschalter (a bis d) bestehen.

**13.** Vorrichtung zur Musiktonsteuerung nach Anspruch 10, bei der die Winkelnachweismittel (602) eine Form aufweisen, die von der Hand eines Spielers gehalten werden kann.

**14.** Vorrichtung zur Musiktonsteuerung nach Anspruch 10, bei der die Winkelnachweismittel (602) die Form eines Stabes aufweisen.

**15.** Vorrichtung zur Musiktonsteuerung nach Anspruch 10, bei der die Musiktonsteuerdaten eine Tonhöhe, eine Lautstärke oder eine Klangfarbe eines zu erzeugenden Musiktones repräsentieren.

**16.** Vorrichtung zur Musiktonsteuerung nach Anspruch 1, bei der die Nachweismittel (701R, 701L) eine Stellung eines vorgegebenen Körperteils des Spielers in bezug auf einen Referenzpunkt als den Winkel ermitteln.

**17.** Vorrichtung zur Musiktonsteuerung nach Anspruch 16, bei der die Nachweismittel (701R, 701L) eine Stellung eines Arms des Spielers ermitteln.

**18.** Vorrichtung zur Musiktonsteuerung nach Anspruch 16, bei der die Nachweismittel (701R, 701L) jeweils die Stellung des rechten Arms und des linken Arms des Spielers ermitteln, wobei die Steuermittel Musiktonsteuerdaten auf der Grundlage einer Kombination der Ermittlungsergebnisse des rechten und des linken Arms des Spielers erzeugen.

**19.** Vorrichtung zur Musiktonsteuerung nach Anspruch 16, bei der die Nachweismittel aus einem Winkelsensor (702R, 702L) bestehen.

**20.** Vorrichtung zur Musiktonsteuerung nach Anspruch 16, bei der die Nachweismittel eine tragbare Form aufweisen.

**21.** Vorrichtung zur Musiktonsteuerung nach Anspruch 19, bei der der Winkelsensor (702R, 702L) an einen vorgegebenen Körperteil des Spielers befestigt ist.

**22.** Vorrichtung zur Musiktonsteuerung nach Anspruch 19, bei der der Winkelsensor eine Form aufweist, welche von der Hand des Spielers gehalten werden kann.

**23.** Vorrichtung zur Musiktonsteuerung nach Anspruch 16, bei der die Musiktonsteuerdaten eine Tonhöhe, eine Lautstärke oder eine Klangfarbe eines zu erzeugenden Musiktones repräsentieren.

**24.** Vorrichtung zur Musiktonsteuerung nach Anspruch 19, bei der die Musiktonsteuerdaten eine musikalische Begleitinformation repräsentieren.

**25.** Vorrichtung zur Musiktonsteuerung nach Anspruch 19, bei der die Musiktonsteuerdaten eine Tonhöhe oder einen Akkord des Musiktones repräsentieren.

**26.** Vorrichtung zur Musiktonsteuerung nach Anspruch 1, bei der die Nachweismittel (202a, 202b, 203a, 203b) so beschaffen sind, daß sie an einem Spieler in der Nähe eines Gelenkes des Spielers befestigt werden können, und einen Winkel des Gelenkteils ermitteln, die Musiktonsteuermittel (201) eine Beugungswinkelgeschwindigkeit des Gelenkteils auf der Grundlage einer Variation des Winkels ermitteln, der von den Nachweismitteln über die Zeit ermittelt wird, und die Musiktonerzeugungsmittel (224) ein Musiktonsignal entsprechend einem von dem ermittelten Winkel abgeleiteten Signal erzeugen.

**Revendications**

**1.** Dispositif de commande de son musical comprenant :

(a) un moyen de commande de son musical (522 sur la figure 10, 614 sur la figure 21, 710 sur la figure 31) pour produire une donnée de commande de son musical basée sur un résultat détecté;
(b) un moyen générateur de son musical (526 sur la figure 10, 605 sur la figure 21, 224 sur la figure 6) couplé au moyen de commande pour produire un signal de son musical sur la base de la donnée de commande de son musical,

caractérisé en ce que le dispositif de commande de son musical comporte en outre :

(c) un moyen de détection (508a, b sur la figure 10, 602 sur la figure 21, 702R, 702L sur la figure 20, 202a, 202b, 203a, 203b sur la figure 6) pouvant être monté sur ou pouvant être tenu par une partie prédéterminée d'un joueur et couplé au moyen de commande pour détecter un angle de la partie prédéterminée du joueur et pour envoyer l'angle détecté en tant que résultat détecté, au moyen de commande de son musical.

**2.** Dispositif de commande de son musical selon la revendication 1, dans lequel le moyen de détection (508a, 508b sur la figure 9 ou 531 sur la figure 16) détecte un angle de flexion ou un angle de rotation d'une partie prédéterminée d'un joueur.

**3.** Dispositif de commande de son musical selon la revendication 2, dans lequel ledit moyen de détection est constitué par un potentiomètre (508a, 508b), qui est monté en un point d'articulation dudit joueur, ledit potentiomètre détectant ledit angle de flexion ou ledit angle de rotation de ladite partie d'articulation.

**4.** Dispositif de commande de son musical selon la revendication 2, dans lequel ledit moyen de détection comprend :

(a) un émetteur ultrasonique (551a, 551b) et un récepteur ultrasonique (552a,552b) dont chacun est monté sur une partie prédéterminée à distance d'une partie d'articulation dudit joueur; et
(b) un circuit de détection ultrasonique (501b) pour détecter ledit angle de flexion ou ledit angle de rotation de ladite partie d'articulation sur la base d'une durée d'émission d'une onde ultrasonique par ledit émetteur ultrasonique en direction dudit récepteur ultrasonique.

**5.** Dispositif de commande de son musical selon la revendication 2, dans lequel ledit moyen de détection (517a à 517d) est constitué par un élément sensible à la pression, qui est monté sur une pointe de doigt (516a à 516d) d'un gant flexible (516), ledit élément sensible à la pression détectant un angle de flexion de la pointe de doigt sur la base d'une pression appliquée audit élément sensible à la pression.

**6.** Dispositif de commande de son musical selon la revendication 2, dans lequel ladite donnée de commande de son musical représente une hauteur de son, un volume acoustique, un timbre ou un tempo d'un son musical devant être produit.

**7.** Dispositif de commande de son musical selon la revendication 2, dans lequel ledit moyen de détection (508a, 508b) évalue si ladite articulation dudit joueur est fléchie ou non.

8. Dispositif de commande de son musical selon la revendication 2, dans lequel ledit moyen de détection évalue si ladite articulation dudit joueur a pivoté ou non.

9. Dispositif de commande de son musical selon la revendication 2, dans lequel ledit moyen de détection détecte un angle de flexion sur la base de degrés de flexion prédéterminés dont chacun représente chacun des angles de flexion prédéterminés.

10. Dispositif de commande de son musical selon la revendication 1, dans lequel le moyen de détection comprend un moyen de détection d'angle (602), qui détecte un angle formé entre la direction d'un objet fixé à ladite partie prédéterminée du joueur et un plan de référence, et produit un signal d'angle représentatif de l'angle détecté, et le moyen (614) de commande de son musical produit une donnée de commande de son musical qui commande un dispositif générateur de sons musicaux extérieurs, sur la base du signal d'angle.

11. Dispositif de commande de son musical selon la revendication 10, dans lequel ledit plan de référence est identifié comme étant un plan horizontal et ledit moyen de détection d'angle (602) détecte ledit angle en utilisant un milieu sensible à l'action de la pesanteur.

12. Dispositif de commande de son musical selon la revendication 10, dans lequel ledit moyen de détection d'angle (602) est constitué par un interrupteur à mercure (a à d).

13. Dispositif de commande de son musical selon la revendication 10, dans lequel ledit moyen de détection d'angle (602) possède une forme qu'un joueur peut tenir à la main.

14. Dispositif de commande de son musical selon la revendication 10, dans lequel ledit moyen de détection d'angle (602) possède la forme d'une baguette.

15. Dispositif de commande de son musical selon la revendication 10, dans lequel ladite donnée de commande de son musical représente une hauteur de son, un volume acoustique ou un timbre d'un son musical devant être produit.

16. Dispositif de commande de son musical selon la revendication 1, dans lequel le moyen de détection (701R, 701L) détecte une position d'une partie prédéterminée d'un joueur par rapport à un point de référence, en tant qu'angle.

17. Dispositif de commande de son musical selon la revendication 16, dans lequel ledit moyen de détection (701R, 701L) détecte une position d'un bras du joueur.

18. Dispositif de commande de son musical selon la revendication 16, dans lequel ledit moyen de détection (701R, 701L) détecte des positions respectives du bras droit et du bras gauche du joueur, ledit moyen de commande produisant ladite donnée de commande de son musical sur la base d'une combinaison de résultats de détection desdits bras gauche et droit du joueur.

19. Dispositif de commande de son musical selon la revendication 16, dans lequel ledit moyen de détection est constitué par un capteur d'angle (702R, 702L).

20. Dispositif de commande de son musical selon la revendication 16, dans lequel ledit moyen de détection possède un agencement tel qu'il est portable.

21. Dispositif de commande de son musical selon la revendication 19, dans lequel ledit capteur d'angle (702R, 702L) est monté sur une partie prédéterminée dudit corps du joueur.

22. Dispositif de commande de son musical selon la revendication 19, dans lequel ledit capteur d'angle possède un agencement tel qu'un joueur peut le tenir à la main.

23. Dispositif de commande de son musical selon la revendication 16, dans lequel la donnée de commande de son musical représente une hauteur de son, un volume acoustique ou un timbre d'un son musical devant être produit.

24. Dispositif de commande de son musical selon la revendication 19, dans lequel ladite donnée de commande de son musical représente une information musicale d'un accompagnement.

25. Dispositif de commande de son musical selon la revendication 19, dans lequel ladite donnée de commande de son musical représente une hauteur de son ou un accord du son musical.

26. Dispositif de commande de son musical selon la revendication 1, dans lequel le moyen de détection (202a, 202b, 203a, 203b) est agencé de manière à être installé sur un joueur au voisinage d'une articulation du joueur et détecte un angle de la partie d'articulation, le moyen (201) de commande de son musical détecte une vitesse angulaire de flexion de la partie d'articulation sur la base d'une variation de l'angle détecté par le moyen de détection dans le temps, et le moyen générateur de son musical (224) produit un signal de son musical en fonction d'un signal dérivé de l'angle détecté.

FIG.1

FIG.2

FIG.3

FIG.4

FIG.5

FIG.6

*FIG.7*

*FIG.8*

## FIG. 9

## FIG. 10

# FIG. 11

# FIG. 12

FIG. 13

FIG. 14

516a ～ 516d

517a～517d

# FIG. 15 A

517a～517d

516a～516d

# FIG. 15 B

530

531

531a

532

# FIG. 16

FIG. 17

FIG. 18

FIG. 19 A

FIG. 19 B

FIG. 19 C

FIG. 20

EP 0 507 355 B1

EP 0 507 355 B1

FIG. 21

FIG. 22

FIG. 23

FIG. 24

FIG. 25

| SWITCH ON | TONE PITCH | KEY CODE DATA |
|---|---|---|
| NONE | C₃ | 60 |
| a | D₃ | 62 |
| a, b | E₃ | 64 |
| a,b,c | F₃ | 65 |
| a,b,c,d | G₃ | 67 |
| b,c,d | A₃ | 69 |
| c,d | B₃ | 71 |
| d | C₄ | 72 |
| OTHER | — | 0 |

FIG. 26

MAIN
ROUTINE

S1

B REGISTER
READ

S2

Dn = 0 ? —YES→ KOND ← 0    S3

NO

S4

Ds = 0 ? —YES→ KOND ← +1    S5

NO

S6

Df = 0 ? —YES→ KOND ← −1    S7

NO    S8

KOND ← −2

KEY PROCESS
ROUTINE

S9

# FIG. 27

KEY PROCESS
ROUTINE

SP1

OLDKOND = KOND ?  —— YES

NO  SP2

OLDKOND ← KOND

SP3

KOND = −2 ?  —— YES

NO  SP5

A REGISTER
READ

SP4

KEY-OFF
SIGNAL KOF
→ MUSICAL
TONE SIGNAL
GENERATING
CKT

SP6

DETERMINE KEY
CODE BASED ON
COMBINATION OF
Da, Db, Dc, Dd → KC

SP7

KC = 0 ?  —— YES

NO  SP8

KC ← KC + KOND

SP9

KEY CODE DATA KC
KEY-ON SIGNAL KON
→ MUSICAL TONE
SIGNAL
GENERATING CKT

RETURN

# FIG. 28

FIG. 29 A

FIG. 29 B

FIG. 29 C

FIG. 29 D

FIG. 29 E

FIG. 29 F

FIG. 29 G

FIG. 29 H

FIG. 29 I

**FIG. 30**

**FIG. 31**

(RIGHT)

|  | 0° | 45° | 90° | 135° | 180° |
|---|---|---|---|---|---|
| 0° | F2 | G2 | A2 | B2 | C3 |
| 45° | C3 | D3 | E3 | F3 | G3 |
| 90° | G3 | A3 | B3 | C4 | D4 |
| 135° | D4 | E4 | F4 | G4 | A4 |
| 180° | A4 | B4 | C5 | D5 | E5 |

(LEFT)

# FIG. 32

| S1 (SWITCH 705) | "1" | "1" | "0" |
|---|---|---|---|
| S2 (SWITCH 706) | "0" | "1" | "1" |
| F2#~F3 | Major | 7th | miner |
| F3#~F4 | M7 | m7 | b5 |
| F4#~E5 | M6 | dim | Aug |

# FIG. 33

RIGHT ARM

RIGHT SHOULDER

703

713

715

714

H

H

# FIG. 34 A

# FIG. 34 B

716

717

720a

715

720

719

718

718a

RIGHT
ELBOW

# FIG. 35